# EUROPÄISCHE PATENTSCHRIFT

(11) **EP 2 288 640 B1**
(45) Veröffentlichungstag und Bekanntmachung des Hinweises auf die Patenterteilung: **19.09.2018**
(21) Anmeldenummer: 09761774.0
(22) Anmeldetag: 12.06.2009
(51) Int. Cl.: C08G 59/40, C08G 59/18

(54) **WASSERVERDÜNNBARES AMIN UND DESSEN ANWENDUNGEN**
WATER SOLUBLE AMINE AND ITS APPLICATION
AMINE SOLUBLE ET SES APPLICATIONS

(30) Priorität: 13.06.2008 EP 08158211
(43) Veröffentlichungstag der Anmeldung: 02.03.2011
(73) Patentinhaber: Sika Technology AG, 6340 Baar (CH)
(72) Erfinder: Bütikofer, Pierre-André, CH-8304 Wallisellen (CH)
(74) Vertreter: Sika Patent Attorneys
(86) Internationale Anmeldenummer: PCT/EP2009/057258
(87) Internationale Veröffentlichungsnummer: WO 2009/150212

(56) Entgegenhaltungen:
- EP-A2- 1 360 250
- GB-A- 905 725
- US-A- 4 980 398
- US-A- 5 116 914
- US-A- 5 145 568
- US-A- 5 194 142
- PHAM ET AL: "Epoxy Resins", 1 January 2004 (2004-01-01), ENCYCLOPEDIA OF POLYMER SCIENCE AND TECHNOLOGY,, PAGE(S) 1 - 127, XP007920796, * pages 751,723; table 14 * * pages 726-727 *

## Beschreibung

### Technisches Gebiet

Die vorliegende Erfindung betrifft das Gebiet der wasserverdünnbaren Amine und deren Anwendung als Härter für Epoxidharze.

### Stand der Technik

Aminhärter für wässrige Epoxidharz-Dispersionen sind bekannt. Sie enthalten üblicherweise ein Addukt aus Polyaminen und Polyepoxiden, welches frei ist von Epoxidgruppen und sekundäre und gegebenenfalls primäre Aminogruppen enthält. Oft werden in einem solchen Addukt vorhandene primäre Aminogruppen weiter umgesetzt, da sonst der Nachteil besteht, dass das Addukt mit Kohlendioxid-Gas aus der Luft zur Bildung von Carbonat- und Carbamatsalzen neigt, wodurch die Qualität eines ausgehärteten Films in Bezug auf ästhetische und mechanische Eigenschaften wie Klarheit, Glanzgrad, Oberflächenbeschaffenheit, Härte und Zähigkeit beeinträchtigt sein kann.

Aus EP 0 000 605 A1 sind Härtungsmittel für wässrige Epoxidharz-Dispersionen in Form von Addukten aus Polyepoxiden, Polyalkylenpolyetherpolyolen und Polyaminen bekannt. Primäre Aminogruppen der Addukte sind zu sekundären Aminogruppen umgesetzt durch Addition an ungesättigte Verbindungen wie Acrylnitril. Diese Härtungsmittel weisen den Nachteil auf, dass sie bei Temperaturen im Bereich von 50 °C zur Koagulation neigen, also nicht lagerstabil sind.

Aus EP 0 567 831 A1 sind Härtungsmittel für wässrige Epoxidharz-Dispersionen bekannt, welche bei 50 °C lagerstabil sind. Beim beschriebenen Emulgator und Coemulgator handelt es sich jeweils um Addukte aus Polyaminen und Polyepoxiden. Primäre Aminogruppen der Addukte sind mittels Aldehyden und Ameisensäure reduktiv alkyliert und liegen in Form von sekundären Aminogruppen vor. Die beschriebenen Härter weisen aber Nachteile auf. Zum einen ist ihre Herstellung aufwändig, insbesondere aufgrund der Langsamkeit des eingesetzten Reduktionsverfahrens, und zum anderen neigen sie dazu, bei dickschichtiger Anwendung, z.B. als Korrosionsschutz-Beschichtung, einen ästhetisch unbefriedigenden, trüben Film zu bilden.

Aus EP 0 024 915 A1 sind zweikomponentige wässrige Epoxidharz-Systeme bekannt, deren Härter in Form von Polyamin-Polyepoxidharz-Addukten vorliegen. Primäre Aminogruppen der Addukte sind mittels Monoepoxiden umgesetzt. Durch die Umsetzung mit Monoepoxiden dauert die Herstellung der beschriebenen Addukte sehr lange. Aus US 4,980,398 sind Epoxidharz-Systeme bekannt, die mit Polyamin-Enamin reagieren.

### Darstellung der Erfindung

Aufgabe der vorliegenden Erfindung ist es daher, Verbindungen bereitzustellen, die in einem einfachen, schnellen Verfahren aus gut zugänglichen Rohstoffen herstellbar sind, die als Härter für Epoxidharze, insbesondere als Bestandteil einer wässrigen Härter-Zusammensetzung für Epoxidharz-Dispersionen, verwendbar sind und welche die Nachteile des Standes der Technik überwinden.

Überraschenderweise wurde gefunden, dass Verbindungen gemäss Anspruch 1 diese Aufgabe lösen können. Die Verbindungen lassen sich bestens als Härter für Epoxidharze verwenden. Insbesondere hat sich gezeigt, dass diese Verbindungen dünnviskos sind, sich auf einfache und schnelle Art und aus gut zugänglichen Rohstoffen herstellen lassen und sich bestens als Härter für Epoxidharze eignen. Sie sind in einem breiten Temperaturbereich weitgehend veränderungsfrei lagerbar, weisen eine tiefe Verarbeitungs- und Mischviskosität mit dem Epoxidharz auf und härten mit dem Epoxidharz rasch und vollständig unter Ausbildung einer guten Haftung zum Untergrund aus. Sie erfüllen die hohen Anforderungen an die Qualität eines ausgehärteten Films in Bezug auf ästhetische und mechanische Eigenschaften wie Klarheit, Glanzgrad, Oberflächenbeschaffenheit, Härte und Zähigkeit.

Besonders hat es sich gezeigt, dass sich diese Verbindungen bestens als wässrige Härter für Epoxidharze eignen. Sie ermöglichen insbesondere die Herstellung von lagerstabilen, niederviskosen wässrigen Härteremulsionen, welche insbesondere bis 50°C stabil sind. Somit bilden weitere Aspekte der Erfindung ein Verfahren gemäss Anspruch 4 zur Herstellung der Verbindung und eine Härter-Zusammensetzung gemäss Anspruch 7.

Zudem wurde gefunden, dass diese Härter-Zusammensetzungen sich bestens für zwei- oder dreikomponentige Epoxidharz-Zusammensetzungen gemäss Anspruch 13 eignen. Insbesondere lassen sich auch ECC-Zusammensetzungen (Epoxy Cement Concrete) erstellen. Insbesondere gut geeignet sind die Verbindungen, resp. die daraus gebildeten wässrigen Härter-Zusammensetzungen, als Bestandteil von ECC-Zusammensetzungen, welche insbesondere als Beschichtung verwendet werden können.

Weitere Aspekte der vorliegenden Erfindung bilden eine ausgehärtete Zusammensetzung gemäss Anspruch 14 und Verwendungen gemäss Anspruch 15 und 16. Bevorzugte Ausführungsformen der Erfindung sind Gegenstand der Unteransprüche.

### Wege zur Ausführung der Erfindung

In einem ersten Aspekt betrifft die vorliegende Erfindung eine Verbindung **VB** der Formel (I) oder (II), 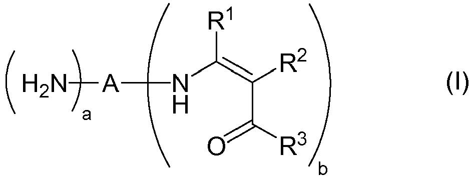 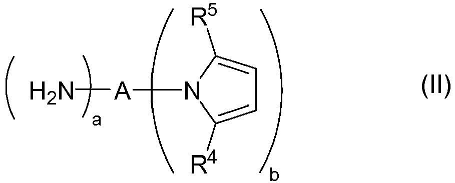 wobei
entweder
R¹ und R³ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen, und
R² für ein Wasserstoffatom oder für eine Alkyl-, Cycloalkyl-, Aryl- oder Arylalkylgruppe mit 1 bis 12 C-Atomen steht,
   oder
R² und R¹ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, stehen und R³ für eine Alkyl-, Cycloalkyl-, Aryl- oder Arylalkylgruppe mit 1 bis 12 C-Atomen, welche gegebenenfalls Ethergruppen oder Halogenatome aufweist, steht;
   oder
R² und R³ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, stehen und R¹ für eine Alkyl-, Cycloalkyl-, Aryl- oder Arylalkylgruppe mit 1 bis 12 C-Atomen, welche gegebenenfalls Ethergruppen oder Halogenatome aufweist, steht;
R⁴ und R⁵ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen;
A für einen (a+b)-wertigen Rest eines Polyamin-Polyepoxid-Addukts nach Entfernung von (a+b) primären Aminogruppen steht;
a für eine ganze Zahl von 0 bis 4 steht; und
b für eine ganze Zahl von 1 bis 4 steht.

Es gelten hierbei die Massgaben,
dass die Summe von a und b für eine ganze Zahl von 1 bis 4 steht,
und dass das dem Polyamin-Polyepoxid-Addukt zugrunde liegende Polyepoxid ein Polyepoxid **E**, insbesondere ein Diepoxid **E1**, ist, und ein Epoxy-Equivalent-Gewicht (EEW) von 65 bis 500 g/Eq aufweist.

Der Begriff "Polyamin" bezeichnet im vorliegenden Dokument Verbindungen mit mindestens zwei primären oder sekundären Aminogruppen.

Als "primäre" Aminogruppe wird im vorliegenden Dokument eine NH₂-Gruppe bezeichnet, die an einen organischen Rest gebunden ist, und als "sekundäre" Aminogruppe wird eine NH-Gruppe bezeichnet, die an zwei organische Reste, welche auch gemeinsam Teil eines Rings sein können, gebunden ist.

Unter "Molekulargewicht" versteht man bei Oligomeren oder Polymeren im vorliegenden Dokument stets das Molekulargewichtsmittel Mₙ.

Der Begriff "Polyepoxid" bezeichnet im vorliegenden Dokument Verbindungen mit mindestens zwei Epoxidgruppen. Als "Diepoxid" werden Verbindungen mit zwei Epoxidgruppen bezeichnet.

Als "Epoxidgruppe" oder "Epoxygruppe" wird im vorliegenden Dokument das Strukturelement 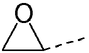 bezeichnet.

Die fett markierten Bezeichnungen wie **VB, E, E1, A1, A2, A3, A4, A11, AD, AE, K1, K2, H1, H2, HW, C1, C2, C3** oder dergleichen im vorliegenden Dokument dienen lediglich für das bessere Leseverständnis und Identifizierung.

Die Acyl-Enaminogruppen der Formel (i) stehen in einem Gleichgewicht mit den tautomeren Isomeren der Formel (ii) und der Formel (iii). Bei jeder Erwähnung der Acyl-Enaminogruppen der Formel (i) sind die Tautomeren der Formel (ii) und der Formel (iii) ebenfalls gemeint, auch wenn dies jeweils nicht ausdrücklich erwähnt ist.

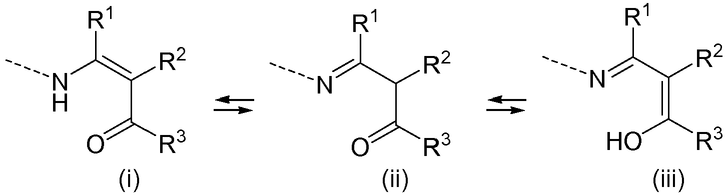

Die gestrichelten Linien in den Formeln stellen in diesem Dokument jeweils die Bindung zwischen einem Substituenten und dem zugehörigen Molekülrest dar.

Bevorzugt stehen R¹ und R³ für je eine Methylgruppe.

Bevorzugt steht R² für ein Wasserstoffatom.

Bevorzugt stehen R⁴ und R⁵ für je eine Methylgruppe.

Bevorzugt steht a für 0.

Bevorzugt steht b für 1.

Das Polyamin-Polyepoxid-Addukt, von welchem sich A in den Formeln (I) und (II) ableitet, ist frei von Epoxidgruppen und weist (a+b) primäre Aminogruppen auf. Es stellt ein Additionsprodukt von mindestens einem Polyamin **A1** und gegebenenfalls weiteren Aminen, bevorzugt mindestens einem weiteren Amin **A2**, mit mindestens einem Polyepoxid **E**, insbesondere einem Diepoxid **E1**, dar. Das Polyepoxid **E** weist ein Epoxy-Equivalent-Gewicht von 65 bis 500 g/Eq auf. Das Polyamin **A1** stellt bevorzugt ein Polyamin mit zwei primären Aminogruppen dar. Das Amin **A2** stellt bevorzugt ein Amin mit nur einer primären Aminogruppe dar. Das Polyepoxid **E** stellt bevorzugt ein Diepoxid **E1** dar, besonders bevorzugt einen flüssigen Diglycidylether von Bisphenolen, insbesondere von Bisphenol-A.

Die Abkürzung "EEW" steht im vorliegenden Dokument für "Epoxy-Equivalent-Gewicht".

Als "Glycidylether" wird im vorliegenden Dokument ein Ether von 2,3-Epoxy-1-propanol (Glycidol) bezeichnet.

Eine Verbindung **VB** der Formel (I) stellt bevorzugt eine Verbindung **VB** der Formel (Ia) oder (Ib) dar. Eine Verbindung **VB** der Formel (II) stellt bevorzugt eine Verbindung **VB** der Formel (IIa) oder (IIb) dar.

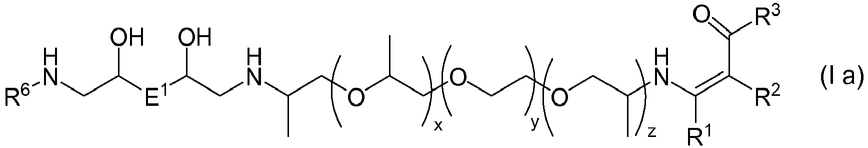

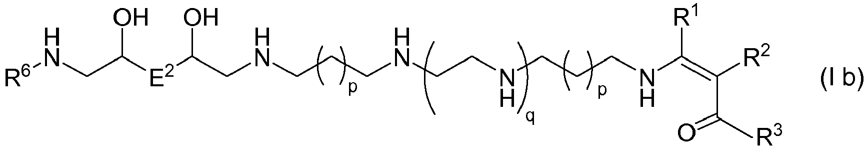

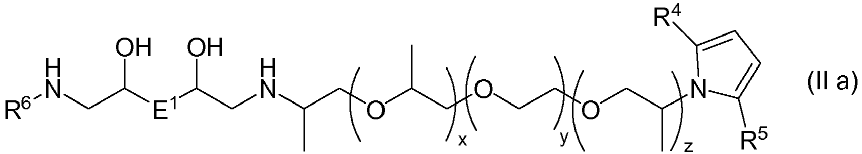

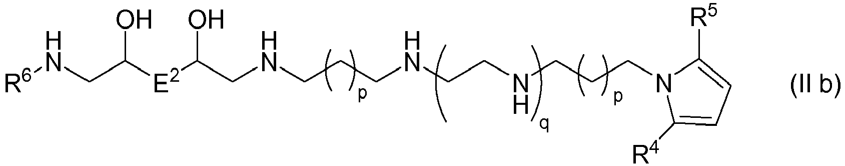

In den Formeln (Ia), (Ib), (IIa) und (IIb) weisen R¹, R², R³, R⁴ und R⁵ die bereits genannten Bedeutungen auf, und
R⁶ steht für eine Alkyl- oder Cycloalkyl- oder Arylalkylgruppe, welche gegebenenfalls Ether- oder sekundäre Aminogruppen aufweist;
E¹ und E² stehen unabhängig voneinander jeweils für den Rest eines Diepoxids **E1** mit einem EEW von 65 bis 500 g/Eq nach Entfernung von zwei Epoxidgruppen;
x steht für eine ganze Zahl von 0 bis 50;
y steht für eine ganze Zahl von 0 bis 100, bevorzugt für 10 bis 50;
z steht für eine ganze Zahl von 1 bis 50;
(x+z) steht für eine ganze Zahl von 1 bis 100, bevorzugt für 1 bis 10;
p steht für 0 oder 1; und
q steht für 0, 1, 2 oder 3.

Bevorzugt steht R⁶ in den Formeln (Ia), (IIa), (Ib) und (IIb) für eine Alkyl- oder Cycloalkyl- oder Arylalkylgruppe mit mindestens 4 C-Atomen, insbesondere mit 4 bis 18 C-Atomen, welche gegebenenfalls Ether- oder sekundäre Aminogruppen aufweist.

Bevorzugt ist das Diepoxid **E1** ausgewählt aus der Gruppe bestehend aus einem Bisphenol-A-, Bisphenol-F- und Bisphenol-A/F-Diglycidylether mit einem Epoxy-Equivalent-Gewicht von 156 bis 250 g/Eq, N,N-Diglycidylanilin und einem Polyglykol-Diglycidylether mit einem Epoxy-Equivalent-Gewicht von 170 bis 340 g/Eq.

Besonders bevorzugt ist das Diepoxid **E1** ein Bisphenol-A-, Bisphenol-F- und Bisphenol-A/F-Diglycidylether.

Somit stehen E¹ in den Formeln (Ia) und (IIa) und E² in den Formeln (Ib) und (IIb) bevorzugt je unabhängig voneinander jeweils für den Rest eines Diepoxids **E1**, das ausgewählt ist aus der Gruppe bestehend aus einem Bisphenol-A-, Bisphenol-F- und Bisphenol-A/F-Diglycidylether mit einem Epoxy-Equivalent-Gewicht von 156 bis 250 g/Eq, N,N-Diglycidylanilin und einem Polyglykol-Diglycidylether mit einem Epoxy-Equivalent-Gewicht von 170 bis 340 g/Eq, insbesondere einem Bisphenol-A-, Bisphenol-F- und Bisphenol-A/F-Diglycidylether mit einem Epoxy-Equivalent-Gewicht von 156 bis 250 g/Eq, nach Entfernung von zwei Epoxidgruppen.

Ein weiterer Gegenstand der Erfindung ist ein Verfahren zur Herstellung einer Verbindung **VB** der Formel (I) oder (II), wie sie vorgängig beschrieben wurde. Hierbei werden (α) mindestens ein Polyamin **A1** enthaltend mindestens zwei primäre Aminogruppen, (β) gegebenenfalls mindestens ein Amin **A2** enthaltend nur eine primäre Aminogruppe, (γ) mindestens ein Polyepoxid E mit einem Epoxy-Equivalent-Gewicht (EEW) von 65 bis 500 g/Eq und (δ) mindestens ein Diketon **K1** der Formel (IV) oder **K2** der Formel (V) über mehr als eine Stufe miteinander umgesetzt.

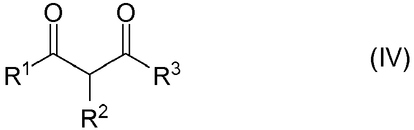

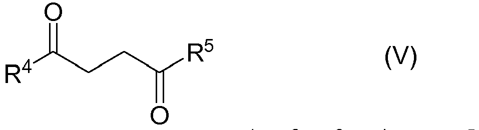

In den Formeln (IV) und (V) weisen R¹, R², R³, R⁴ und R⁵ die bereits erwähnten Bedeutungen auf.

Das Verhältnis zwischen der Anzahl primärer Aminogruppen und Epoxidgruppen beträgt insbesondere 1.25 bis 2.0. Weiterhin wird das Diketon **K1** oder **K2** im Verhältnis zu den in Bezug auf die Epoxidgruppen überschüssigen primären Aminogruppen insbesondere in einer Menge von 0.25 bis 1.0 Equivalent eingesetzt.

Für den Fall, dass in den Formeln (I) oder (II) der Index a verschieden von null ist, wird das Diketon im Verhältnis zu den in Bezug auf die Epoxidgruppen überschüssigen primären Aminogruppen unterstöchiometrisch eingesetzt.

Für den Fall, dass in den Formeln (I) oder (II) der Index a für null steht, wird das Diketon im Verhältnis zu den in Bezug auf die Epoxidgruppen überschüssigen primären Aminogruppen mindestens stöchiometrisch eingesetzt.

Das Verfahren kann so durchgeführt werden, dass in einer ersten Stufe das Polyamin **A1** und gegebenenfalls das Amin **A2** mit dem Polyepoxid **E** zu einem Addukt **AE** der Formel (III) umgesetzt wird, wobei vorwiegend primäre Aminogruppen mit den Epoxidgruppen reagieren, während aufgrund der wesentlich geringeren Reaktivität bereits vorhandene oder im Verlauf der Reaktion gebildete sekundäre Aminogruppen und Hydroxylgruppen nicht oder nur zu einem unwesentlichen Teil mit Epoxidgruppen reagieren.

A(̵NH₂)_{a+b} (III)

In der Formel (III) weisen A, a und b die bereits erwähnten Bedeutungen auf.

In einer zweiten Stufe wird anschliessend das Addukt **AE** der Formel (III) mit dem Diketon **K1** oder **K2** der Formel (IV) oder (V) zu einer Verbindung **VB** der Formel (I) oder (II) umgesetzt, wobei das Diketon unter Wasserabspaltung mit primären Aminogruppen reagiert.

Im Fall des Diketons **K1** der Formel (IV) -einem β-Diketon, auch 1,3-Diketon genannt - wird eine Verbindung **VB** der Formel (I) gebildet, wobei pro mol umgesetztes Diketon **K1** ein mol Wasser frei wird. Diese Umsetzung erfolgt sehr schnell und annähernd quantitativ. Sie wird bevorzugt bei einer Temperatur im Bereich von 20 bis 120 °C durchgeführt.

Im Fall des Diketons **K2** der Formel (V) -einem γ-Diketon, auch 1,4-Diketon genannt - wird eine Verbindung **VB** der Formel (II) gebildet, wobei pro mol umgesetztes Diketon **K2** zwei mol Wasser frei werden. Diese Reaktion ist auch bekannt unter dem Namen "Paal-Knorr-Pyrrol-Synthese". Bei der Bildung der Verbindung **VB** der Formel (II) tritt als Zwischen- (bzw. Neben-) Produkt die nicht-cyclisierte Form, wie sie in der Formel (II') dargestellt ist, auf.

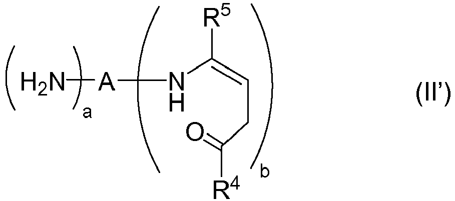

In der Formel (II') weisen R⁴, R⁵, A, a und b die bereits genannten Bedeutungen auf.

Die Cyclisierung zur Pyrrolgruppe (Kondensationsreaktion) erfolgt zu einem überwiegenden Teil, wenn die Reaktionsmischung beispielsweise während einiger Stunden bei erhöhter Temperatur, wie beispielsweise 60 bis 120 °C, gerührt wird.

Weiterhin kann das Verfahren zur Herstellung einer Verbindung **VB** der Formel (I) oder (II) auch so durchgeführt werden, dass in einer ersten Stufe das Polyamin **A1** mit dem Diketon **K1** oder **K2** unter Wasserabspaltung zu einem alkylierten Polyamin **A11** der Formel (VI) oder (VII) umgesetzt wird, wobei die Diketone in der bereits beschriebenen Weise mit primären Aminogruppen reagieren.

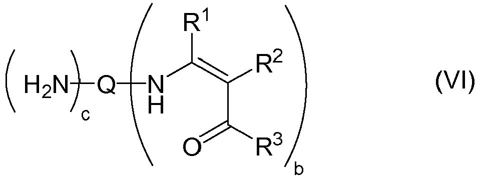

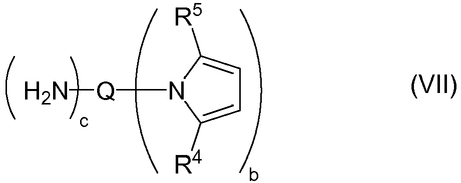

In den Formeln (VI) und (VII) stehen
Q für den Rest eines Polyamins **A1** nach Entfernung von (b+c) primären Aminogruppen;
c für 1 oder 2, bevorzugt für 1;
und R¹, R², R³, R⁴, R⁵ und b weisen die bereits erwähnten Bedeutungen auf.

In einer zweiten Stufe wird anschliessend das alkylierte Polyamin **A11,** gegebenenfalls in Anwesenheit des Amins **A2,** mit dem Polyepoxid **E** zu einer Verbindung **VB** der Formel (I) oder (II) umgesetzt, wobei in der Reaktionsmischung noch mindestens gleich viele freie primäre Aminogruppen wie Epoxidgruppen vorhanden sind.

In den beschriebenen Verfahren wird die Umsetzung von primären Aminogruppen mit Epoxidgruppen vorteilhaft bei einer Temperatur im Bereich von 60 bis 120 °C durchgeführt.

Die beschriebenen Verfahren können als Eintopfverfahren durchgeführt werden. Es ist also nicht notwendig, das Zwischenprodukt zu reinigen, bevor die 2. Stufe durchgeführt wird. Das bei der Umsetzung zwischen dem Diketon und den primären Aminogruppen gebildete Wasser muss nicht aus der Reaktionsmischung entfernt werden. Es kann aber, falls gewünscht, aus der Reaktionsmischung entfernt werden, beispielsweise mittels Anlegen von Vakuum.

Es ist auch möglich, eine Verbindung **VB** der Formel (I) herzustellen, indem anstelle eines Diketons **K1** der Formel (IV) ein Keton der Formel (IV a) verwendet wird. In diesem Fall erfolgt die Alkylierung der primären Aminogruppen ohne Abspaltung von Wasser.

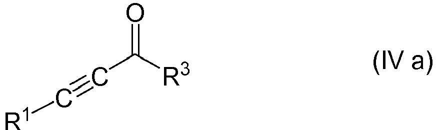

In der Formel (IVa) weisen R¹ und R³ die bereits genannten Bedeutungen auf.

Das Polyamin **A1** weist mindestens zwei primäre Aminogruppen auf. Weiterhin kann es sekundäre und/oder tertiäre Aminogruppen aufweisen. Geeignet hierfür sind insbesondere die folgenden Polyamine:
- aliphatische, cycloaliphatische oder arylaliphatische Diamine, insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 2,5(2,6)-Bis-(aminomethyl)-bicyclo[2.2.1]heptan (NBDA), 3(4),8(9)-Bis-(aminomethyl)-tricyclo[5.2.10^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische Diamine, insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin und höhere Oligomere dieser Diamine, Bis-(3-aminopropyl)poly-tetrahydrofurane und Polytetrahydrofuran-diamine mit Molekulargewichten im Bereich von beispielsweise 350 bis 5200, sowie Polyoxyalkylen-Diamine. Letztere stellen typischerweise Produkte aus der Aminierung von Polyoxyalkylen-Diolen dar und sind beispielsweise erhältlich unter dem Namen Jeffamine® (von Huntsman), unter dem Namen Polyetheramin (von BASF) oder unter dem Namen PC Amine® (von Nitroil). Insbesondere geeignete Polyoxyalkylen-Diamine sind Jeffamine® D-230, Jeffamine® D-400, Jeffamine® D-2000, Jeffamine® D-4000, Jeffamine® XTJ-511, Jeffamine® ED-600, Jeffamine® ED-900, Jeffamine® ED-2003, Jeffamine® XTJ-568, Jeffamine® XTJ-569, Jeffamine® XTJ-523, Jeffamine® XTJ-536, Jeffamine® XTJ-542, Jeffamine® XTJ-559, Jeffamine® EDR-104, Jeffamine® EDR-148, Jeffamine® EDR-176; Polyetheramin D 230, Polyetheramin D 400 und Polyetheramin D 2000, PC Amine® DA 250, PC Amine® DA 400, PC Amine® DA 650 und PC Amine® DA 2000;
- aliphatische, cycloaliphatische oder arylaliphatische Triamine, insbesondere 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-amino-propyl)-amin, Tris-(3-aminopropyl)-amin;
- Polyoxyalkylen-Triamine, welche typischerweise Produkte aus der Aminierung von Polyoxyalkylen-Triolen darstellen und beispielsweise erhältlich sind unter dem Handelsnamen Jeffamine® (von Huntsman), unter dem Namen Polyetheramin (von BASF) oder unter dem Namen PC Amine® (von Nitroil), wie zum Beispiel Jeffamine® T-403, Jeffamine® T-3000, Jeffamine® T-5000; Polyetheramin T403, Polyetheramin T5000; und PC Amine® TA 403, PC Amine® TA 5000;
- sekundäre Aminogruppen aufweisende Polyamine, insbesondere sogenannte Polyalkylenamine wie Diethylentriamin (DETA), Triethylentetramin (TETA), Tetraethylenpentamin (TEPA), Pentaethylenhexamin (PEHA), sowie Polyethylenpolyamin mit 5 bis 7 Ethylenamin-Einheiten (sogenanntes "higher ethylenepolyamine", HEPA), Dipropylentriamin (DPTA), Bishexamethylentriamin (BHMT), 3-(2-Aminoethyl)aminopropylamin (N3-Amin), N,N'-Bis(3-aminopropyl)ethylendiamin (N4-Amin), N3-(3-Aminopentyl)-1,3-pentandiamin, N5-(3-Aminopropyl)-2-methyl-1,5-pentandiamin und N5-(3-Amino-1-ethylpropyl)-2-methyl-1,5-pentandiamin; solche Polyalkylenamine werden beispielsweise hergestellt aus 1,2-Dichlorethan und Ammoniak, oder aus der Cyanoethylierung oder Cyanobutylierung und anschliessender Hydrierung von primären Polyaminen;
- tertiäre Aminogruppen aufweisende Polyamine, insbesondere N,N'-Bis-(aminopropyl)-piperazin, N,N-Bis-(3-aminopropyl)methylamin, N,N-Bis-(3-amino-propyl)ethylamin, N, N-Bis-(3-aminopropyl)propylamin N,N-Bis-(3-amino-propyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)-dodecylamin und N,N-Bis-(3-aminopropyl)-talgalkylamin, erhältlich als Triameen® Y12D und Triameen® YT (von Akzo Nobel).

Bevorzugt weist das Polyamin **A1** zwei primäre Aminogruppen auf.

Besonders bevorzugte Polyamine **A1** sind einerseits Ethergruppen-haltige Diamine der Formel (VIII), insbesondere mit einem Molekulargewicht von 500 bis 5000 g/mol, bevorzugt Jeffamine® ED-600, Jeffamine® ED-900, Jeffamine® ED-2003, sowie andererseits Polyalkylenamine, insbesondere DETA, TETA, TEPA, PEHA, HEPA, N3-Amin und N4-Amin.

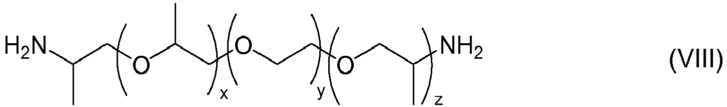

In der Formel (VIII) weisen x, y und z die bereits genannten Bedeutungen auf.

Ein geeignetes Amin **A2,** wie es gegebenenfalls zur Herstellung einer Verbindung **VB** der Formel (I) oder (II) mitverwendet wird, weist nur eine primäre Aminogruppe auf. Weiterhin enthält es gegebenenfalls sekundäre und/oder tertiäre Aminogruppen. Geeignet sind beispielsweise die folgenden Amine:
- aliphatische, cycloaliphatische oder arylaliphatische Monoamine, insbesondere Methylamin, Ethylamin, 1-Propylamin, 2-Propylamin, 1-Butylamin, 2-Butylamin, tert.Butylamin, 3-Methyl-1-butylamin, 3-Methyl-2-butylamin, Cyclopentylamin, Hexylamin, Cyclohexylamin, Octylamin, 2-Ethyl-1-hexylamin, Benzylamin, 1- oder 2-Phenylethylamin, Decylamin, Dodecylamin, Tetradecylamin, Hexadecylamin, Octadecylamin, Eicosylamin, Docosylamin, sowie von natürlichen Fettsäuregemischen abgeleitete Fettamine, wie zum Beispiel Cocoalkylamin, C₁₆-C₂₂-Alkylamin, Soyaalkylamin, Oleylamin und Talgalkylamin, erhältlich beispielsweise unter den Handelsnamen Armeen® (von Akzo Nobel) oder Rofamin® (von Ecogreen Oleochemicals). Insbesondere geeignete Fettamine sind Armeen® 12D, Armeen® 18D, Armeen® CD, Armeen® HT, Armeen® M, Armeen® OD, Armeen® OVD und Armeen® TD, sowie Rofamin® KD, Rofamin® LD, Rofamin® STD, Rofamin® TD, Rofamin® RD, Rofamin® TD40, Rofamin® OD80, Rofamin® OD85 und Rofamin® OD90;
- Ethergruppenhaltige aliphatische, cycloaliphatische oder arylaliphatische Monoamine, insbesondere 2-Methoxyethylami n, 2-Ethoxyethylamin, 3-Methoxypropylamin, 3-Ethoxypropylamin, 3-(2-Ethylhexyloxy)propylamin, 3-(2-Methoxyethoxy)propylamin, 2(4)-Methoxyphenylethylamin, sowie Polyoxyalkylen-Monoamine, welche beispielsweise erhältlich sind unter dem Handelsnamen Jeffamine® (von Huntsman), wie insbesondere Jeffamine® M-600, Jeffamine® M-1000, Jeffamine® M-2005, Jeffamine® M-2070, Jeffamine® XTJ-435, Jeffamine® XTJ-436;
- eine primäre und mindestens eine sekundäre Aminogruppe aufweisende aliphatische, cycloaliphatische oder arylaliphatische Amine, insbesondere N-Methyl-1,2-ethandiamin, N-Ethyl-1,2-ethandiamin, N-Butyl-1,2-ethandiamin, N-Hexyl-1,2-ethandiamin, N-Butyl-1,6-hexandiamin, N-Cyclohexyl-1,2-ethan-diamin, 4-Aminomethyl-piperidin, 3-(4-Aminobutyl)-piperidin, N-(2-Aminoethyl)piperazin (N-AEP), N-(2-Aminopropyl)piperazin, Diamine aus der Cyanoethylierung oder Cyanobutylierung und anschliessender Hydrierung von primären Monoaminen, beispielsweise N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)amino-1-pentylamin, 3-Dodecylamino-1-pentylamin, 3-Cyclohexyl-amino-1-pentylamin, sowie weiterhin durch Cyanoethylierung und nachfolgender Reduktion von Fettaminen erhältliche Diamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, erhältlich beispielsweise als Duomeen® CD, Duomeen® M, Duomeen® O, Duomeen® OV oder Duomeen® T (Akzo Nobel), sowie weiterhin von Fettaminen abgeleitete Triamine und Tetramine, wie Cocoalkyldipropylentriamin, Oleyldipropylentriamin, Talgalkyldipropylentriamin, Oleyltripropylentetramin und Talgalkyltripropylentetramin, erhältlich beispielsweise als Triameen® C, Triameen® OV, Triameen® T, Tetrameen® OV und Tetrameen® T (Akzo Nobel);
- eine primäre und mindestens eine tertiäre Aminogruppe aufweisende aliphatische, cycloaliphatische oder arylaliphatische Amine, insbesondere N,N-Diethyl-1,2-ethandiamin, N,N-Dimethyl-1,3-propandiamin, N,N-Diethyl-1,3-propandiamin und N,N-Diethyl-1,4-pentandiamin.

Bevorzugte Amine **A2** enthalten mindestens 4 C-Atome, insbesondere 4 bis 18 C-Atome, und weisen gegebenenfalls Ether- oder sekundäre Aminogruppen auf.

Besonders bevorzugte Amine **A2** sind Amine, welche ausgewählt sind aus der Gruppe bestehend aus Butylamin, Pentylamin, Hexylamin, Cyclohexylamin, Octylamin, Decylamin, Dodecylamin, Tetradecylamin, Hexadecylamin, Octadecylamin, Eicosylamin, Docosylamin, 2-Ethyl-1-hexylamin, Benzylamin, 1-oder 2-Phenylethylamin, N-Hexyl-1,2-ethandiamin, N-(2-Ethylhexyl)-1,2-ethandiamin, N-Cyclohexyl-1,2-ethandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, Cocoalkylamin, Soyaalkylamin, Oleylamin, N-Cocoalkyl-1,3-propandiamin, N-Oleyl-1,3-propandiamin und N-Soyaalkyl-1,3-propandiamin.

Das Polyepoxid **E** weist ein Epoxy-Equivalent-Gewicht (EEW) von 65 bis 500 g/Eq auf. Polyepoxide **E** können auf bekannte Art und Weise zum Beispiel aus der Oxidation von den entsprechenden Olefinen oder aus der Reaktion von Epichlorhydrin mit den entsprechenden Polyolen, Polyphenolen oder Aminen hergestellt werden.

Als Polyepoxid **E** insbesondere geeignet sind sogenannte Polyepoxid-Flüssigharze, im Folgenden als "Flüssigharz" bezeichnet. Sie weisen eine Glasübergangstemperatur auf, welche üblicherweise unterhalb von 25 °C liegt, im Gegensatz zu Polyepoxid-Festharzen, welche sich zu bei 25 °C schüttfähigen Pulvern zerkleinern lassen und eine Glasübergangstemperatur oberhalb von 25 °C aufweisen. Auch Polyepoxide, welche dem Fachmann als Reaktivverdünner bekannt sind, werden im vorliegenden Dokument als Flüssigharze bezeichnet.

In einer Ausführungsform handelt es sich beim Polyepoxid E um ein aromatisches Polyepoxid. Dafür geeignet sind beispielsweise Flüssigharze der Formel (IX), 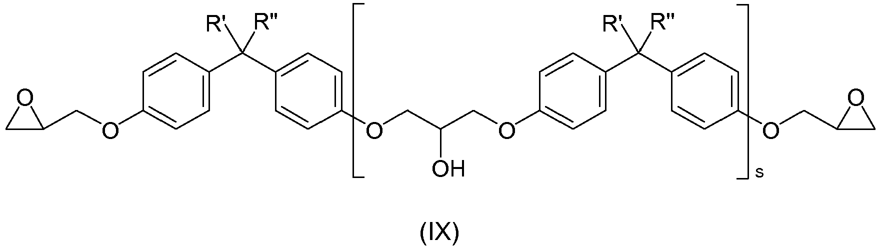 wobei R' und R" unabhängig voneinander jeweils für ein Wasserstoffatom oder für eine Methylgruppe stehen, und s im Mittel für einen Wert von 0 bis 1 steht. Bevorzugt sind solche Flüssigharze der Formel (IX), bei denen der Index s im Mittel für einen Wert von kleiner als 0.2 steht.

Bei den Flüssigharzen der Formel (IX) handelt es sich um Diglycidylether von Bisphenol-A, Bisphenol-F und Bisphenol-A/F, wobei A für Aceton und F für Formaldehyd steht, welche als Edukte zur Herstellung dieser Bisphenole dienen. Ein Bisphenol-A-Flüssigharz weist dementsprechend Methylgruppen, ein Bisphenol-F-Flüssigharz Wasserstoffatome und ein Bisphenol-A/F-Flüssigharz sowohl Methylgruppen als auch Wasserstoffatome als R' und R" in Formel (IX) auf. Im Fall von Bisphenol-F können auch Stellungsisomere vorhanden sein, insbesondere abgeleitet von 2,4'- und 2,2'-Hydroxyphenylmethan.

Solche Flüssigharze sind kommerziell erhältlich, beispielsweise als Araldite® GY 240, Araldite® GY 250, Araldite® GY 260, Araldite® GY 281, Araldite® GY 282, Araldite® GY 285, Araldite® PY 304, Araldite® PY 720 (von Huntsman); D.E.R.® 330, D.E.R.® 331, D.E.R.® 332, D.E.R.® 336, D.E.R.® 354, D.E.R® 351, D.E.R® 352, D.E.R.® 356 (von Dow); Epikote® 162, Epikote® 827, Epikote® 828, Epikote® 158, Epikote® 862, Epikote® 169, Epikote® 144, Epikote® 238, Epikote® 232, Epikote® 235 (von Hexion), Epalloy® 7190, Epalloy® 8220, Epalloy® 8230, Epalloy® 7138, Epalloy® 7170, Epalloy® 9237-70 (von CVC), Chem Res® E 20, Chem Res® E 30 (von Cognis), Beckopox® EP 116, Beckopox® EP 140 (von Cytec).

Weitere geeignete aromatische Polyepoxide **E** sind die Glycidylisierungsprodukte von
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1 -Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M).

Kommerziell erhältliche Epoxy-Novolake sind beispielsweise Araldite® EPN 1179, Araldite® GY 289, Araldite® PY 307-1 (von Huntsman), D.E.N.® 425 und D.E.N.® 431 (von Dow), Epalloy® 8240 und Erisys® RF50 (von CVC), ein kommerziell erhältliches N,N-Diglycidylanilin ist beispielsweise Epikote® Resin 493 (von Hexion); ein kommerziell erhältlicher Resorcinoldiglycidylether ist beispielsweise Erisys® RDGE (von CVC).

In einer weiteren Ausführungsform handelt es sich beim Polyepoxid E um ein aliphatisches oder cycloaliphatisches Polyepoxid, wie beispielsweise
- Diglycidylether;
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder-A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Aliphatische oder cycloaliphatische Flüssigharze sind beispielsweise kommerziell erhältlich als Araldite® DY-C, Araldite® DY-F, Araldite® DY-H, Araldite® DY-T, Araldite® DY 0397, Araldite® DY 3601 (von Huntsman), D.E.R.® 732, D.E.R.® 736 (von Dow); Heloxy® BD, Heloxy® HD, Heloxy® TP, Epikote® 877 (von Hexion), Beckopox® EP 075 (von Cytec).

In einer weiteren Ausführungsform ist das Polyepoxid **E** ein Polyepoxid, welches aus der Oxidation von Olefinen hergestellt wurde, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Beim Polyepoxid **E** handelt es sich bevorzugt um ein Diepoxid **E1.**

Besonders bevorzugt ist das Diepoxid **E1** ausgewählt aus der Gruppe bestehend aus einem Bisphenol-A-, Bisphenol-F- und Bisphenol-A/F-Diglycidylether mit einem Epoxy-Equivalent-Gewicht von 156 bis 250 g/Eq, insbesondere Araldite® GY 250, Araldite® PY 304, Araldite® GY 282 (von Huntsman); D.E.R.® 331, D.E.R.® 330 (von Dow); Epikote® 828, Epikote® 862 (von Hexion), N,N-Diglycidylanilin und einem Polyglykol-Diglycidylether mit einem Epoxy-Equivalent-Gewicht von 170 bis 340 g/Eq, insbesondere D.E.R.® 732 und D.E.R.® 736 (von Dow).

Als Diketon **K1** der Formel (IV) geeignet sind insbesondere 2,4-Pentandion (= Acetylaceton), in 3-Stellung alkyliertes 2,4-Pentandion, also insbesondere 3-Methyl-, 3-Ethyl-, 3-Propyl-, 3-Isopropyl-, 3-Butyl-, 3-tert.Butyl-, 3-Cyclohexyl- und 3-Phenyl-2,4-pentandion, 1,1,1-Trifluoro-2,4-pentandion, 1,1,1,5,5,5-Hexafluoro-2,4-pentandion, 3,5-Heptandion, 3,5-Octandion, 2,4-Octandion, 6-Methyl-3,5-heptandion, 2,2,6,6-Tetramethyl-3,5-heptandion, 2,2,4,6,6-Pentamethyl-3,5-heptandion, 1-Phenyl-1,3-butandion, 2-Acetylcyclopentanon, 2-Acetylcyclohexanon, 2-Benzoyl-cyclopentanon und 2-Benzoylcyclohexanon.

Bevorzugte Diketone **K1** sind ausgewählt aus der Gruppe bestehend aus 2,4-Pentandion, 3-Methyl-, 3-Ethyl-, 3-Propyl-, 3-Isopropyl-, 3-Butyl-, 3-tert.Butyl-, 3-Cyclohexyl- und 3-Phenyl-2,4-pentandion, 3,5-Heptandion, 6-Methyl-3,5-heptandion, 2,2,6,6-Tetramethyl-3,5-heptandion, 2,2,4,6,6-Pentamethyl-3,5-heptandion, 2-Acetylcyclopentanon und 2-Acetylcyclohexanon.

Besonders bevorzugt als Diketon **K1** ist 2,4-Pentandion.

Als Diketon **K2** der Formel (V) geeignet sind insbesondere Diketone ausgewählt aus der Gruppe bestehend aus 2,5-Hexandion (= Acetonylaceton), 3,4-Dimethyl-2,5-hexandion, 1,2-Dibenzoylethan, 1,4-Bis-(2-furyl)-1,4-butan-dion und 2-(2-Oxopropyl)-cyclopentanon. Bevorzugt als Diketon **K2** ist 2,5-Hexandion.

Ein bevorzugtes Verfahren zur Herstellung einer Verbindung **VB** der Formel (I) oder (II) ist dadurch gekennzeichnet, dass (α) mindestens ein Polyamin **A1** mit zwei primären Aminogruppen, (β) mindestens ein Amin **A2,** (γ) mindestens ein Diepoxid **E1** und (δ) mindestens ein Diketon **K1** der Formel (IV) oder **K2** der Formel (V) im Molverhältnis 1 : (0.8 bis 1.2) : (0.8 bis 1.2) : (0.8 bis 1.2), insbesondere 1:1:1:1, in einer der bereits beschriebenen Reihenfolgen, das heisst über ein Zwischenprodukt der Formel (III), beziehungsweise über ein Zwischenprodukt der Formel (VI) oder (VII), miteinander umgesetzt werden.

In einem ersten besonders bevorzugten Verfahren wird mindestens ein Polyamin **A1** in Form eines Polyoxyalkylendiamins, mindestens ein Amin **A2** und mindestens ein Diepoxid **E1** im Molverhältnis 1 : (0.8 bis 1.2) : (0.8 bis 1.2), insbesondere 1:1:1, zu einem Addukt **AE** umgesetzt, und dieses anschliessend im Molverhältnis 1 : (0.8 bis 1.2), insbesondere 1:1, mit mindestens einem Diketon **K1** der Formel (IV) oder **K2** der Formel (V) zu einer Verbindung **VB** der Formel (Ia) oder (IIa) umgesetzt.

In einem zweiten besonders bevorzugten Verfahren werden mindestens ein Polyamin **A1** in Form eines Polyalkylenamins und mindestens ein Diketon **K1** der Formel (IV) oder **K2** der Formel (V) im Molverhältnis 1 : (0.8 bis 1.2), insbesondere 1:1, zu einem alkylierten Polyamin **A11** umgesetzt, und dieses anschliessend im Molverhältnis 1 : (0.8 bis 1.2) : (0.8 bis 1.2), insbesondere 1:1:1, mit mindestens einem Amin **A2** und mindestens einem Diepoxid **E1** zu einer Verbindung **VB** der Formel (Ib) oder (IIb) umgesetzt.

Es ist auch möglich, eine Verbindung **VB** der Formel (Ia) oder (IIa) vorzulegen und darin - quasi wie in einem Lösemittel - eine Verbindung **VB** der Formel (Ib) oder (IIb) herzustellen. Auf diese Weise lässt sich in einem Eintopfverfahren eine Mischung aus mindestens einer Verbindung **VB** der Formel (Ia) oder (IIa) und mindestens einer Verbindung **VB** der Formel (Ib) oder (IIb) herstellen.

Die Verbindung **VB** der Formel (I) oder (II) ist in einem einfachen Verfahren aus gut zugänglichen Rohstoffen herstellbar. Sie weist bevorzugt mindestens zwei gegenüber Epoxidgruppen aktive NH-Wasserstoffatome auf, welche, zumindest teilweise, in Form von sekundären Aminogruppen vorliegen. Sekundäre Aminogruppen sind dabei insbesondere aus der Umsetzung von primären Aminogruppen mit Epoxidgruppen entstanden. Bevorzugt weist die Verbindung **VB,** respektive der Rest A, keine primären Aminogruppen auf. Falls sie, bzw. er, dennoch primäre Aminogruppen aufweist, ist deren Anzahl vorzugsweise 1 oder 2. Dadurch reagiert sie kaum bis gar nicht mit Kohlendioxid-Gas aus der Luft und bildet dadurch wenig bis keine Carbonat- und/oder Carbamatsalze. Die Abwesenheit solcher Salzbildung ist insbesondere bei einem Einsatz der Verbindung **VB** als Härter für Epoxidharze sehr vorteilhaft, da es dadurch bei der Aushärtung des Epoxidharzes nicht zu salzbedingten optischen und/oder mechanischen Defekten, wie insbesondere den als "Blushing" bekannten Filmtrübungen, kommen kann. Die Acyl-Enaminogruppen der Formel (i) aus der Umsetzung mit dem Diketon **K1** der Formel (IV) - beziehungsweise die Pyrrolgruppen aus der Umsetzung mit dem Diketon **K2** der Formel (V) - der Verbindung **VB** sind stabil, auch in Anwesenheit von Wasser und bei erhöhter Temperatur, wie beispielsweise bei 60 °C. Mit Epoxidgruppen reagieren sie - auch in Anwesenheit von Feuchtigkeit - nicht in nennenswertem Ausmass, trotz des Enamin-Stickstoffs in der Acyl-Enaminogruppe; letztere stellt eine vinyloge Amidogruppe dar, in welcher das Wasserstoffatom des Enamin-Stickstoffs eine stabile intramolekulare Wasserstoffbrücke mit dem Carbonylsauerstoff eingehen kann.

Die Verbindung **VB** weist eine für Polyepoxid-Polyamin-Addukte vergleichsweise niedrige Viskosität auf.

Die Verbindung **VB** der Formel (I) oder (II) lässt sich verwenden als Reaktionspartner für Substanzen, welche gegenüber NH- und OH-Gruppen reaktive Gruppen aufweisen. Gegenüber NH- und OH-Gruppen reaktive Gruppen sind beispielsweise Isocyanat-, Isothiocyanat-, Cyclocarbonat-, Epoxid-, Episulfid-, Aziridin-, Acryl-, Methacryl-, 1-Ethinylcarbonyl-, 1-Propinylcarbonyl-, Maleimid-, Citraconimid-, Vinyl-, Isopropenyl- oder Allyl-Gruppen. Vorteilhaft verwenden lässt sich die Verbindung **VB** als Härter für Substanzen, welche mindestens zwei der vorgenannten Reaktivgruppen aufweisen, insbesondere als Härter für Polyisocyanate und Polyepoxide. Speziell geeignet ist die Verbindung **VB** als Härter für Epoxidharze. Vorteilhaft wird die Verbindung **VB** eingesetzt als Bestandteil einer Mischung, welche weitere als Härter für Epoxidharze geeignete Substanzen enthält.

Am meisten geeignet ist die Verbindung **VB** der Formel (I) oder (II) als Bestandteil eines wasserverdünnbaren Härters für wässrige Epoxidharz-Dispersionen.

Ein weiterer Gegenstand der vorliegenden Erfindung ist eine Härter-Zusammensetzung enthaltend mindestens eine Verbindung **VB** der Formel (I) oder (II), bevorzugt mindestens eine Verbindung **VB** der Formel (Ia) oder (IIa) und mindestens eine Verbindung **VB** der Formel (Ib) oder (IIb), wie sie vorgängig beschrieben wurden.

Eine Härter-Zusammensetzung enthaltend mindestens eine Verbindung **VB** der Formel (Ia) oder (IIa) und mindestens eine Verbindung **VB** der Formel (Ib) oder (IIb) wird im Folgenden auch als Härter-Zusammensetzung **H1** bezeichnet.

Eine Härter-Zusammensetzung **H1** ist ähnlich aufgebaut wie die in EP 0 567 831 A1 beschriebene Mischung aus einem Emulgator und einem Coemulgator. Der Unterschied zur in EP 0 567 831 A1 beschriebenen Emulgator-Coemulgator-Mischung besteht darin, dass die primären Aminogruppen auf andere Weise umgesetzt beziehungsweise verschlossen sind, nämlich mittels mindestens einem Diketon **K1** der Formel (IV) oder einem Diketon **K2** der Formel (V) anstatt durch reduktive Alkylierung mittels Aldehyd und Ameisensäure. Beim Verschliessen von primären Aminogruppen mittels reduktiver Alkylierung werden sekundäre Aminogruppen gebildet, während bei der Umsetzung mit einem Diketon **K1** oder **K2** die primären Aminogruppen so verschlossen sind, dass sie gegenüber Epoxidgruppen keine Reaktivität mehr aufweisen. Überraschenderweise sind die beschriebenen Härter-Zusammensetzungen **H1** aber dennoch genauso gut geeignet als Härter in Epoxidharz-Zusammensetzungen wie die in EP 0 567 831 A1 beschriebenen Emulgator-Coemulgator-Mischungen. Das Verschliessen der primären Aminogruppen mittels einem Diketon **K1** oder **K2** weist dabei gegenüber der in EP 0 567 831 A1 beschriebenen reduktiven Alkylierung eine Reihe von Vorteilen auf. Die Umsetzung mit Diketon ist nämlich wesentlich schneller, was eine stark verkürzte Herstellzeit eines entsprechenden wasserverdünnbaren Härters bedeutet. Weiterhin entsteht bei der Umsetzung mit Diketon kein CO₂, welches mit primären Aminogruppen störende Carbonat- und Carbamatsalze bilden kann, wie dies bei der reduktiven Alkylierung in EP 0 567 831 A1 der Fall ist. Das bei der Umsetzung mit den Diketonen **K1** oder **K2** anfallende Wasser stört bei einem Einsatz als wasserverdünnbarer Härter nicht.

Bevorzugt enthält die Härter-Zusammensetzung, insbesondere die Härter-Zusammensetzung **H1,** zusätzlich zu mindestens einer Verbindung **VB** der Formel (I) oder (II) weiterhin
(b) mindestens ein Addukt **AD** aus mindestens einem Polyamin **A3** mit mindestens zwei Aminogruppen in Form von primären oder sekundären Aminogruppen und mindestens einem Polyepoxid **E** mit einem Epoxy-Equivalent-Gewicht (EEW) von 65 bis 500 g/Eq, wobei das Addukt **AD** terminale primäre und/oder sekundäre Aminogruppen aufweist,
(c) gegebenenfalls mindestens ein Polyamin **A4** mit mindestens zwei Aminogruppen in Form von primären oder sekundären Aminogruppen, und
(d) gegebenenfalls Wasser.

Eine solche bevorzugte Härter-Zusammensetzung wird im Folgenden als Härter-Zusammensetzung **H2** bezeichnet.

Bevorzugt enthält die Härter-Zusammensetzung **H2** eine Mischung aus einer Verbindung **VB** der Formel (Ia) oder (IIa) und einer Verbindung **VB** der Formel (Ib) oder (IIb), wie sie vorgängig beschrieben wurden. Eine solche Mischung kann in der Härter-Zusammensetzung beim Vermischen mit Wasser eine selbstemulgierende Wirkung entfalten.

Die Verbindung **VB** der Formel (Ia) oder (IIa) liegt dabei vorteilhaft in einer Menge von 0.5 bis 1.5 Gewichtsteilen, bezogen auf 1 Gewichtsteil der Verbindung **VB** der Formel (Ib) oder (IIb), vor.

Weiterhin ist in der Härter-Zusammensetzung **H2** ein Addukt **AD** vorhanden. Zur Herstellung eines geeigneten Adduktes **AD** sind als Polyamin **A3** in einer Ausführungsform dieselben Polyamine geeignet, wie sie bereits vorgängig als Polyamine **A1** mit mindestens zwei primären Aminogruppen erwähnt wurden. In einer weiteren Ausführungsform sind als Polyamin **A3** dieselben Polyamine geeignet, wie sie bereits als Amine **A2** mit einer primären und mindestens einer sekundären Aminogruppe erwähnt wurden. In einer weiteren Ausführungsform sind als Polyamin **A3** Polyamine mit mindestens zwei sekundären Aminogruppen geeignet, insbesondere N,N'-Dibutylethylendiamin; N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink® 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylen-dipiperidin N-alkylierte Polyetheramine, beispielsweise die Jeffamine®-Typen SD-231, SD-401, SD-404 und SD-2001 (von Huntsman).

Bevorzugt als Polyamin **A3** zur Herstellung eines Adduktes **AD** sind jene, welche ausgewählt sind aus der Gruppe bestehend aus einerseits Polyoxyalkylen-Diaminen der Formel (VIII) mit einem Molekulargewicht von höchstens 1000 g/mol, bevorzugt Jeffamine® D-230, Jeffamine® D-400, Jeffamine® XTJ-511, Jeffamine® EDR-104, Jeffamine® EDR-148, Jeffamine® EDR-176; Polyetheramin D 230, Polyetheramin D 400, PC Amine® DA 250, PC Amine® DA 400 oder PC Amine® DA 650, sowie andererseits Isophorondiamin (IPDA), 2,2,4- und 2,4,4-Trimethylhexamethylendiamin (TMD), 1,3-Xylylendiamin (meta-Xylylendiamin oder MXDA), 2-Butyl-2-ethyl-1,5-pentandiamin (C11-Neo-diamin), N-Ethyl-1,3-propandiamin und N-Cyclohexyl-1,3-propandiamin.

Zur Herstellung eines geeigneten Adduktes **AD** sind als Polyepoxid **E** dieselben Polyepoxide geeignet und auch bevorzugt, wie sie bereits zur Herstellung einer Verbindung **VB** der Formel (I) oder (II) beschrieben sind, insbesondere die erwähnten Diepoxide **E1.**

Ein besonders geeignetes Addukt **AD** ist das Addukt aus zwei Mol Polyamin **A3** mit zwei Aminogruppen in Form von primären oder sekundären Aminogruppen und einem Mol Diepoxid **E1.**

Das Addukt **AD** liegt in der Härter-Zusammensetzung **H2** vorteilhaft in einer Menge von 0.5 bis 1.5 Gewichtsteilen, bezogen auf 1 Gewichtsteil der Verbindung **VB** der Formel (I) oder (II), vor.

Als Polyamin **A4** sind dieselben Polyamine geeignet, wie sie bereits als Polyamine **A3** zur Herstellung eines Adduktes **AD** erwähnt wurden, sowie weiterhin sogenannte Polyamidoamine. Als Polyamidoamin wird das Reaktionsprodukt aus einer ein- oder mehrwertigen Carbonsäure, beziehungsweise deren Ester oder Anhydride, und einem aliphatischen, cycloaliphatischen oder aromatischen Polyamin bezeichnet, wobei das Polyamin im stöchiometrischen Überschuss eingesetzt wird. Als mehrwertige Carbonsäure wird üblicherweise eine sogenannte Dimerfettsäure verwendet, und als Polyamin wird üblicherweise ein Polyalkylenamin wie beispielsweise TETA verwendet. Kommerziell erhältliche Polyamidoamine sind beispielsweise Versamid® 100, 125, 140 und 150 (von Cognis), Aradur® 223, 250 und 848 (von Huntsman), Euretek® 3607, Euretek® 530 (von Huntsman), Beckopox® EH 651, EH 654, EH 655, EH 661 und EH 663 (von Cytec).

Als Polyamin **A4** kann das gleiche Polyamin wie das zur Herstellung eines Adduktes **AD** verwendete Polyamin **A3** vorhanden sein, beispielsweise indem bei der Umsetzung mit dem Polyepoxid **E** ein Überschuss an Polyamin **A3** eingesetzt wurde, so dass nach der Umsetzung aller Epoxidgruppen noch unreagiertes Polyamin **A3** vorhanden ist.

Als Polyamin **A4** bevorzugt sind eher hydrophobe Polyamine, insbesondere ausgewählt aus der Gruppe bestehend aus Isophorondiamin, Bis-(4-aminocyclohexyl)-methan (H₁₂-MDA), Bis-(4-amino-3-methylcyclohexyl)-methan, 2,2,4- und 2,4,4-Trimethylhexamethylendiamin (TMD), 1,3-Xylylendiamin (meta-Xylylendiamin oder MXDA) und 2-Butyl-2-ethyl-1,5-pentandiamin (C11-Neodiamin).

Das Polyamin **A4** liegt in der Härter-Zusammensetzung **H2** vorteilhaft in einer Menge von 0.01 bis 0.5 Gewichtsteilen, bezogen auf 1 Gewichtsteil der Summe aus der Verbindung **VB** der Formel (I) oder (II) und des Adduktes **AD,** vor.

Bevorzugt enthält die Härter-Zusammensetzung **H2** Wasser, insbesondere in einer Menge von 20 bis 90 Gewichts-%, bezogen auf die gesamte Härter-Zusammensetzung.

Besonders bevorzugt enthält die Härter-Zusammensetzung **H2** mindestens eine Verbindung **VB** der Formel (Ia) oder (IIa), mindestens eine Verbindung **VB** der Formel (Ib) oder (IIb), mindestens ein Addukt **AD,** mindestens ein Polyamin **A4** und Wasser.

Die Herstellung einer Härter-Zusammensetzung **H2** kann in einer beliebigen Reihenfolge erfolgen.

In einem bevorzugten Herstellverfahren, einem Eintopfverfahren, wird mindestens eine Verbindung **VB** der Formel (I) oder (II) vorgelegt, und darin - quasi wie in einem Lösemittel - das Addukt **AD** hergestellt. Die Herstellung des Adduktes **AD** erfolgt vorteilhaft bei erhöhter Temperatur, beispielsweise bei einer Temperatur im Bereich von 60 bis 120 °C. Anschliessend wird der Reaktionsmischung ein Polyamin **A4** zugegeben. Und schliesslich wird die Reaktionsmischung mit Wasser verdünnt, bis der gewünschte Festkörpergehalt erreicht ist, beispielsweise ein Festkörpergehalt im Bereich von 10 bis 80 Gewichts-%.

Gegenüber einem Härtungsmittel, wie es in EP 0 567 831 A1 beschrieben ist, weist die hier beschriebene Härter-Zusammensetzung den grossen Vorteil auf, dass die Herstellung der Verbindung **VB** der Formel (I) oder (II) wesentlich schneller ist als die in EP 0 567 831 A1 beschriebene Herstellung des Emulgators und Coemulgators.

Die Härter-Zusammensetzung **H2** kann weitere Substanzen in Form von Hilfs- und Zusatzstoffen enthalten.

Bevorzugt enthält die Härter-Zusammensetzung **H2** Wasser und weist einen Festkörpergehalt im Bereich von 10 bis 80 Gewichts-% auf. Eine solche Härter-Zusammensetzung wird im Folgenden als wässrige Härter-Zusammensetzung **HW** bezeichnet.

Eine wässrige Härter-Zusammensetzung **HW** liegt in der Form einer Emulsion vor. Die Verbindung **VB** der Formel (I) oder (II) kann dabei eine emulgierende Wirkung haben, insbesondere wenn mindestens eine Verbindung **VB** der Formel (Ia) oder (IIa) und mindestens eine Verbindung **VB** der Formel (Ib) oder (IIb) vorhanden ist. Das Erscheinungsbild der Emulsion hängt von der Feinheit der Emulsions-Tröpfchen ab. Feinteilige Emulsionen (Mikroemulsionen) sind klar oder leicht opaleszent und weisen typischerweise den Tyndallefekt auf, während grobteilige (Makroemulsionen) trüb bis milchig erscheinen. Mikroemulsionen weisen Teilchen auf, welche in der Grössenordnung des sichtbaren Lichtes oder kleiner sind. Typischerweise weist eine Mikroemulsion eine mittlere Teilchengrösse von kleiner als 100 nm auf.

Bevorzugt liegt die wässrige Härter-Zusammensetzung **HW** in einem breiten Temperaturbereich, insbesondere im Bereich zwischen 0 und 50 °C, als Mikroemulsion vor.

Die wässrige Härter-Zusammensetzung **HW** weist typischerweise eine relativ geringe Viskosität auf, so dass sie bei Raumtemperatur gut handhabbar ist.

Eine bevorzugte wässrige Härter-Zusammensetzung **HW** enthaltend neben Wasser mindestens eine Verbindung **VB** der Formel (Ia) oder (IIa), mindestens eine Verbindung **VB** der Formel (Ib) oder (IIb), mindestens ein Addukt **AD** und mindestens ein Polyamin **A4** liegt in Form einer thermodynamisch stabilen Emulsion vor und weist ein klares bis leicht trübes Erscheinungsbild auf. Eine solche wässrige Härter-Zusammensetzung **HW** lässt sich durch einfaches Einrühren von Wasser weiter verdünnen. Typischerweise ist eine solche wässrige Härter-Zusammensetzung lagerstabil bis zu einer Temperatur um 50 °C. Als "lagerstabil" wird dabei der Umstand bezeichnet, dass die wässrige Härter-Zusammensetzung bei der Lagerung nicht koalesziert, d.h. keine Phasentrennung zeigt, und in der vorgesehenen Weise verwendbar bleibt. Die Lagerstabilität bis 50 °C ist eine wichtige Eigenschaft, welche von wässrigen Epoxid-Härtern nach dem Stand der Technik selten erfüllt wird.

Eine der beschriebenen Härter-Zusammensetzungen wird vorteilhaft verwendet als Bestandteil einer Epoxidharz-Zusammensetzung, wobei sie als Härter für mindestens ein Epoxidharz wirkt.

Ein weiterer Gegenstand der vorliegenden Erfindung ist somit eine zwei- oder dreikomponentige Epoxidharz-Zusammensetzung, bestehend aus einer Härter-Komponente **C1** und einer Harz-Komponente **C2** und gegebenenfalls einer weiteren Komponente **C3.**

Die zwei- oder dreikomponentige Epoxidharz-Zusammensetzung kann insbesondere als Klebstoff, Abdichtungsmasse, Vergussmasse, Beschichtung, Bodenbelag, Anstrich, Lack, Primer oder Grundierung, bevorzugt als Beschichtung, insbesondere als Bodenbeschichtung, verwendet werden.

In einer ersten Ausführungsform besteht die Epoxidharz-Zusammensetzung aus einer Härter-Komponente **C1** und einer Harz-Komponente **C2.**

Die Härter-Komponente **C1** enthält mindestens eine Härter-Zusammensetzung, wie sie vorgängig beschrieben wurden.

Die Harz-Komponente **C2** enthält mindestens ein Epoxidharz.

Als Epoxidharz sind dabei in der Epoxychemie übliche Epoxidharze geeignet, wie beispielsweise
- ein Polyepoxid **E**, wie es bereits vorgängig genannt wurde;
- ein Bisphenol-A-, -F- oder -A/F-Festharz, welches ähnlich aufgebaut ist wie die bereits als Polyepoxid **E** genannten Flüssigharze der Formel (IX), aber anstelle des Index s einen Wert von 2 bis 12 aufweist, und weiterhin eine Glasübergangstemperatur oberhalb von 25 °C aufweist;
- eines der genannten Epoxidharze, welches durch die Umsetzung mit mindestens einem Polyoxyalkylenpolyol hydrophil modifiziert ist.

Bevorzugt als Epoxidharz sind Bisphenol-A-, -F- oder -A/F-Fest- oder Flüssigharze, wie sie kommerziell beispielsweise von Dow, Huntsman und Hexion erhältlich sind.

Das Epoxidharz kann einen sogenannten Reaktivverdünner enthalten. Als Reaktivverdünner geeignet sind Mono- und Polyepoxide, wie beispielsweise die Glycidylether von ein- oder mehrwertigen Phenolen und aliphatischen oder cycloaliphatischen Alkoholen, wie insbesondere die bereits als aliphatische oder cycloaliphatische Polyepoxide **E** genannten Polyglycidylether von Di- oder Polyolen, sowie weiterhin insbesondere Phenylglycidylether, Kresylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether oder C₁₂- bis C₁₄-Alkylglycidylether, kommerziell erhältlich als Erysis® GE-7 beziehungsweise Erysis® GE-8 (von CVC). Die Zugabe eines Reaktivverdünners zum Epoxidharz bewirkt eine Reduktion der Viskosität, sowie - im ausgehärteten Zustand der Epoxidharz-Zusammensetzung - eine Reduktion der Glasübergangstemperatur und der mechanischen Werte.

Enthält die Härter-Komponente **C1** eine wässrige Härter-Zusammensetzung **HW,** so enthält die Harz-Komponente **C2** bevorzugt entweder ein sogenanntes "emulgierbares Epoxidharz" oder eine wässrige Epoxidharz-Dispersion. Eine Epoxidharz-Dispersion enthält bevorzugt neben Wasser mindestens ein Epoxidharz, wie es vorgängig genannt wurde, und weiterhin mindestens einen Emulgator, insbesondere einen nichtionischen Emulgator, beispielsweise einen Alkyl- oder Alkylaryl-polyglykolether, insbesondere ein polyalkoxyliertes Alkylphenol wie Alkylphenoxypoly-(ethylenoxy)ethanol, beispielsweise ein Polyaddukt aus Nonylphenol und Ethylenoxid, enthaltend pro Mol Nonylphenol bis zu 30 Mol Ethylenoxid.

Handelsübliche Epoxidharz-Dispersionen sind beispielsweise Sika® Repair/Sikafloor® EpoCem® Modul A (von Sika Schweiz AG), Araldite® PZ 323, Araldite® PZ 756/67, Araldite® PZ 3961 (von Huntsman), XZ 92598.00, XZ 92546.00, XZ 92533.00 (von Dow), Waterpoxy® 1422, Waterpoxy® 1455 (von Cognis), Beckopox® EP 384w, Beckopox® EP 385w, Beckopox® EP 386w, Beckopox® EP 2340w, Beckopox® VEP 2381w (von Cytec).

Epoxidharz-Dispersionen weisen üblicherweise einen Festkörpergehalt im Bereich von 40 - 65 Gewichts-% auf.

Ein emulgierbares Epoxidharz enthält bevorzugt mindestens einen Emulgator, wie er bereits vorgängig als Bestandteil einer Epoxidharz-Dispersion erwähnt wurde.

Handelsübliche emulgierbare Epoxidharze sind beispielsweise Araldite® PY 340 und Araldite® PY 340-2 (von Huntsman), Beckopox® 122w und Beckopox® EP 147w (von Cytec).

Sowohl die Härter-Komponente **C1** als auch die Harz-Komponente **C2** können weitere Hilfs- und Zusatzstoffe enthalten, wie beispielsweise
- nicht-reaktive Verdünner, Lösemittel oder Filmbildehilfsmittel, wie Toluol, Xylol, Methylethylketon, 2-Ethoxyethanol, 2-Ethoxy-ethylacetat oder Benzylalkohol, Ethylenglykol, Diethylenglykolbutylether, Dipropylenglykolbutylether, Ethylenglykolbutylether, Ethylenglykolphenylether, N-Methylpyrrolidon, Propylenglykolbutylether, Propylenglykolphenylether, Bisphenole und Phenolharze, Diphenylmethan, Diisopropylnaphthalin, Erdölfraktionen wie zum Beispiel Solvesso®-Typen (von Exxon), aromatische Kohlenwasserstoffharze, Sebacate, Phthalate, organische Phosphor- und Sulfonsäureester und Sulfonamide;
- Reaktivverdünner und Extender, beispielsweise Epoxidgruppen-haltige Reaktivverdünner, wie sie vorgängig bereits erwähnt wurden, epoxidiertes Sojaöl, Butyrolakton, Triphenylphosphit, sowie weiterhin Polyamide, Polymere mit Carboxylgruppen, Isocyanate, Reaktivgruppen-aufweisende Silikone, Polysulfide, Butadien-Acrylnitril-Copolymere und Polyurethane;
- Polymere, wie beispielsweise Polyamide, Polysulfide, Polyvinylformal (PVF), Polyvinylbutyral (PVB), Polyurethane (PUR), Styrol-Butadien-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluor-haltige Polymere, Sulfonamid-modifizierte Melamine;
- thermoplastische Polymere wie Polyethersulfon, Polyetherimid und Bitumen;
- anorganische und organische Füllstoffe, zum Beispiel gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Dolomite, Wollastonite, Kaoline, Mica (Kalium-AluminiumSilikat), Molekularsiebe, Aluminiumoxide, Aluminiumhydroxide, Kieselsäuren, Zemente, Gipse, Flugaschen, Russ, Graphit, Metall-Pulver wie Aluminium, Kupfer, Eisen, Silber oder Stahl, PVC-Pulver oder Hohlkugeln;
- Fasern, beispielsweise aus Kunststoff oder Glas;
- Pigmente, beispielsweise Titandioxid oder Eisenoxide;
- Beschleuniger, welche die Reaktion zwischen Aminogruppen und Epoxidgruppen beschleunigen, beispielsweise Säuren oder zu Säuren hydrolysierbare Verbindungen, beispielsweise organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie beispielsweise Phosphorsäure, oder Mischungen der vorgenannten Säuren und Säureester; weiterhin tertiäre Amine wie 1,4-Diazabicyclo[2.2.2]octan, Benzyldimethylamin, α-Methylbenzyldimethylamin, 2-(Dimethylaminomethyl)-phenol oder 2,4,6-Tris-(dimethylaminomethyl)-phenol, Triethanolamin, Dimethyl-aminopropylamin, Salze solcher tertiärer Amine, sowie quaternäre Ammoniumsalze, wie beispielsweise Benzyltrimethylammoniumchlorid;
- Rheologie-Modifizierer, wie insbesondere Verdickungsmittel, zum Beispiel Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Haftverbesserer, beispielsweise Organoalkoxysilane wie 3-Glycidoxypropyltrimethoxysilan, 3-Aminopropyltrimethoxysilan, N-(2-Aminoethyl)-3-amino-propyl-trimethoxysilan, N-(2-Aminoethyl)-N'-[3-(trimethoxysilyl)propyl]ethylendiamin, 3-Ureidopropyltrimethoxysilan, 3-Chloropropyltrimethoxysilan, Vinyltrimethoxysilan, oder die entsprechenden Organoalkoxysilane mit Ethoxy- anstelle der Methoxygruppen;
- Stabilisatoren gegen Wärme, Licht oder UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Die Härter-Komponente **C1** und die Harz-Komponente **C2** können jeweils in einer geeigneten Verpackung oder Anordnung, wie beispielsweise einem Fass, einem Hobbock, einem Beutel, einem Eimer, einer Büchse, einer Kartusche oder einer Tube, vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändern.

Das Mischungsverhältnis zwischen der Härter-Komponente **C1** und der Harz-Komponente **C2** wird bevorzugt so gewählt, dass die gegenüber Epoxidgruppen reaktiven Gruppen der Härter-Komponente **C1** in einem geeigneten Verhältnis zu den Epoxidgruppen der Harz-Komponente **C2** stehen. Geeigneterweise sind vor der Aushärtung 0.7 bis 1.5, bevorzugt 0.9 bis 1.1, Equivalent gegenüber Epoxidgruppen aktive NH-Wasserstoffe pro Equivalent Epoxidgruppen vorhanden.

In Gewichtsteilen liegt das Mischungsverhältnis zwischen der Härter-Komponente **C1** und der Harz-Komponente **C2** üblicherweise im Bereich von 1:10 bis 10:1.

Vor oder während der Applikation werden die beiden Komponenten mittels eines geeigneten Verfahrens miteinander vermischt. Das Mischen kann kontinuierlich oder batchweise erfolgen. Falls das Vermischen vor der Applikation erfolgt, muss darauf geachtet werden, dass zwischen dem Vermischen der Komponenten und der Applikation nicht zuviel Zeit vergeht, da es dadurch zu Störungen, wie beispielsweise einem verlangsamten oder unvollständigen Aufbau der Haftung zur Festkörperoberfläche, kommen kann.

Mit dem Mischen beginnt die Aushärtungsreaktion. Die in der Epoxidharz-Zusammensetzung vorhandenen, gegenüber Epoxidgruppen reaktiven NH-Wasserstoffe reagieren mit vorhandenen Epoxidgruppen, wodurch die Zusammensetzung schliesslich aushärtet. Somit beschreibt die vorliegende Erfindung auch eine ausgehärtete Zusammensetzung, welche durch ein Mischen der Komponenten einer zwei- oder dreikomponentigen Epoxidharz-Zusammensetzung, wie sie vorgängig beschrieben wurde, erhalten wird.

Die Applikation und die Aushärtung erfolgen vorteilhaft bei Temperaturen im Bereich von 5 bis 50 °C.

Die Aushärtung erfolgt schnell und vollständig. Die Aushärtungsgeschwindigkeit ist abhängig von der Umgebungstemperatur und von gegebenenfalls vorhandenen Beschleunigern. Die Geschwindigkeit der Aushärtung kann mittels eines sogenannten Trockenzeit-Messgerätes von Byk Gardner bestimmt werden. Dabei wird eine Nadel mit einer definierten Geschwindigkeit über einen auf einen Glasstreifen applizierten Film gezogen, wobei je nach Aushärtungsgrad des Films zuerst eine sogenannte "Grundspur" in den Film gezeichnet wird, dann ein sogenannter _{"}Filmaufriss" erfolgt, welcher schliesslich in eine sogenannte "Oberflächenspur" übergeht, bevor der Film soweit trocken ist, dass die Nadel keine sichtbare Spur mehr hinterlässt. Als "flow" kann dabei der Moment bezeichnet werden, wo die applizierte Zusammensetzung nicht mehr richtig zusammenfliesst, also der Beginn der Grundspur. Als "softgel" kann der Moment bezeichnet werden, wo der Filmaufriss beginnt. Als "hardgel" kann der Moment bezeichnet werden, wo der Filmaufriss in die Oberflächenspur übergeht, und als "cured" kann der Moment bezeichnet werden, wo die Oberflächenspur verschwindet und die Nadel keine sichtbare Spur mehr hinterlässt.

Bei der Aushärtung der beschriebenen Epoxidharz-Zusammensetzung entstehen typischerweise klare Filme mit einer glatten Oberfläche und hohem Glanz, welche eine hohe Härte und Zähigkeit und eine ausgezeichnete Haftung auf verschiedensten Untergründen aufweisen.

Die Epoxidharz-Zusammensetzung kann verwendet werden als Klebstoff, Abdichtungsmasse, Vergussmasse, Beschichtung, Bodenbelag, Anstrich, Lack, Primer oder Grundierung, wobei Eigenschaften wie Wasserdichtigkeit, Korrosionsschutz, Chemikalienbeständigkeit und/oder hohe Härte und Zähigkeit im Vordergrund stehen können. Ihre Verwendung kann beispielsweise im Hoch- oder Tiefbau, in der Fertigung oder Reparatur von industriellen Gütern oder Konsumgütern erfolgen.

In einer weiteren Ausführungsform besteht die Epoxidharz-Zusammensetzung aus einer Härter-Komponente **C1,** einer Harz-Komponente **C2** und einer weiteren Komponente **C3.** In dieser Ausführungsform enthält die Härter-Komponente **C1** bevorzugt mindestens eine wässrige Härter-Zusammensetzung **HW,** die Harz-Komponente **C2** enthält bevorzugt mindestens eine Epoxidharz-Dispersion, und die Komponente **C3** enthält mindestens eine hydraulisch abbindbare mineralische Substanz. Eine solche Epoxidharz-Zusammensetzung wird auch als ECC-Zusammensetzung bezeichnet (ECC für "epoxy cement concrete").

Als hydraulisch abbindbare mineralische Substanz geeignet sind
- klassisch als hydraulische Bindemittel bezeichnete Substanzen, welche mit Wasser auch unter Wasser erhärtbar sind, wie Kalk und insbesondere Zement;
- latent-hydraulische Bindemittel, welche unter dem Einwirken von Zusätzen mit Wasser abbinden, wie insbesondere Hochofenschlacke oder Flugasche ;
- Substanzen, welche lediglich an Luft mit Wasser reagieren, sogenannte nichthydraulische Bindemittel, wie insbesondere Gips, Sorelzement, Anhydrit, Magnesia-Bindemittel und Weisskalk.

Somit werden im vorliegenden Dokument neben Zementen insbesondere auch Calciumsulfat in Form von Anhydrit, Halbhydrat- oder Dihydratgips, oder Hochofenschlacke als hydraulisch abbindende Substanzen bezeichnet.

Bevorzugt ist die hydraulisch abbindende Substanz ein Zement, insbesondere ein Zement gemäss Euronorm EN 197. Bevorzugt als Zement sind Portlandzemente, Sulfoaluminatzemente und Tonerdeschmelzzemente, insbesondere Portlandzement. Mischungen von Zementen können zu besonders guten Eigenschaften führen. Besonders geeignet sind Mischungen von mindestens einem Portlandzement mit entweder mindestens einem Sulfoaluminatzement oder mit mindestens einem Tonerdeschmelzzement. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat in Form von Anhydrit, Halbhydrat- oder Dihydratgips und/oder Calciumhydroxid enthalten.

Die Komponente **C3** enthält gegebenenfalls weitere Substanzen, wie beispielsweise verschiedene Sand-Typen oder Quarz-Mehle, Flugasche, Pigmente und in der Zementindustrie übliche Hilfs- und Zusatzmittel wie zum Beispiel Verflüssiger oder Abbindebeschleuniger oder Entschäumer.

Die Komponente **C3** einer ECC-Zusammensetzung liegt typischerweise in Pulverform vor, während die Härter-Kompnente **C1** und die Harz-Komponente **C2** in flüssiger Form vorliegen.

Eine ECC-Zusammensetzung wird typischerweise verwendet als qualitativ hochwertige Beschichtung oder Mörtel, welche feuchtigkeitsdicht sind, gute mechanische Eigenschaften, wenig Schwund und gute Haftung insbesondere auf feuchten Untergründen, aufweisen, beispielsweise als Bodenbelag, Sperrschicht zur Abdichtung gegen Nässe und Feuchtigkeit, als Estrich, Klebemörtel oder Fliesenkleber, als Nivellier-, Spachtel- oder Grundiermasse oder als Reparaturmörtel. Weiterhin zeichnen sich derartige ECC-Zusammensetzungen durch eine hohe Chemikalienbeständigkeit aus.

Die Applikation der beschriebenen Epoxidharz-Zusammensetzungen erfolgt auf mindestens ein Substrat, wobei als Substrat die Folgenden geeignet sind:
- Glas, Glaskeramik, Beton, Mörtel, Backstein, Ziegel, Gips und Natursteine wie Granit oder Marmor;
- Metalle oder Legierungen wie Aluminium, Stahl, Eisen, Buntmetalle, verzinkte Metalle;
- Leder, Textilien, Papier, Holz, mit Harz gebundene Holzwerkstoffe, Harz-Textil-Verbundwerkstoffe und weitere sogenannte Polymer-Composites;
- Kunststoffe wie Polyvinylchlorid (Hart- und Weich-PVC), Acrylonitril-Butadien-Styrol-Copolymere (ABS), SMC (Sheet Moulding Compounds), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- beschichtete Substrate wie pulverbeschichtete Metalle oder Legierungen; sowie Farben und Lacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten oder dergleichen, wobei dabei entstehende Stäube vorteilhaft abgesaugt werden, sowie weiterhin Behandeln mit Reinigern oder Lösemitteln oder das Aufbringen eines Haftvermittlers, einer Haftvermittlerlösung oder eines Primers.

### Beispiele

### 1. Beschreibung der Messmethoden

Die **Viskosität** wurde auf einem Kegel-Platten-Viskosimeter Rheotec RC30 (Kegeldurchmesser 25 mm, Kegelwinkel 1°, Kegelspitze-PlattenAbstand 0.05 mm, Scherrate 50 s⁻¹) gemessen. Die bei 50°C resp. bei 20°C gemessene Viskosität wurde als "η_{50°C}" in Tabelle 1, resp. als "η_{20°C}" in Tabelle 2, angegeben.

### 2. verwendete Rohmaterialien

| | |
|---|---|
| Jeffamine® ED-2003 (Huntsman) | Polyoxyalkylendiamin auf Basis von propoxyliertem Polyethylenglykol, mittleres Molekulargewicht = 2000 g/mol |
| Armeen® CD (Akzo Nobel) | Cocosalkylamin (C₁₂-Fettamin), mittleres Molekulargewicht = 200 g/mol |
| Araldite® GY 250 (Huntsman) | Bisphenol-A-Diglycidylether, EEW = 187 g/Eq, mittleres Molekulargewicht also ca. 375 g/mol |
| N4-Amin (BASF) | N,N'-Bis(3-aminopropyl)ethylendiamin, Molekulargewicht = 174 g/mol |
| Tetraethylenpentamin (Delamine) ("*TEPA*") | technisch, Molekulargewicht = 189 g/mol |
| Benzylamin | Molekulargewicht = 107 g/mol |
| 2,5-Hexandion (Wacker) | Molekulargewicht = 114 g/mol |
| 2,4-Pentandion (Wacker) | Molekulargewicht = 100 g/mol |
| 2-Ethylhexylamin | Molekulargewicht = 129 g/mol |
| Dimethylacrylamid | Molekulargewicht = 99 g/mol |
| Butylenoxid | Molekulargewicht = 72 g/mol |
| Jeffamine® D-230 (Huntsman) | Polypropylenglykol-Diamin, mittleres Molekulargewicht = 240 g/mol |
| Isophorondiamin (Evonik) ("*IPDA*") | 1-Amino-3-aminomethyl-3,5,5-trimethylcyclohexan, Molekulargewicht = 170 g/mol |
| meta-Xylylendiamin (Mitsubishi Gas Chem.) ("*MXDA*") | 1,3-Bis(aminomethyl)-benzol, Molekulargewicht = 136 g/mol |

### 3. Herstellung von Härter-Zusammensetzungen vom Typ H1

### Beispiel 1

In einem Rundkolben wurden unter Stickstoffatmosphäre 200.0 g Jeffamine® ED-2003 und 20.0 g Armeen® CD bei einer Temperatur von 90 °C vorgelegt. Unter gutem Rühren wurden langsam 37.5 g Araldite® GY 250 zugegeben, wobei darauf geachtet wurde, dass die Temperatur nicht über 105 °C stieg, und die Reaktionsmischung anschliessend während 2 Stunden bei 90 °C weitergerührt. Dann wurden 11.4 g 2,5-Hexandion zugegeben und während 15 Min. bei 90 °C eingerührt. Darauf wurden 52.2 g N4-Amin, dann weitere 34.2 g 2,5-Hexandion zur Reaktionsmischung gegeben und während 15 Min. bei 90 °C eingerührt. Darauf wurden weitere 60.0 g Armeen® CD, dann weitere 112.5 g Araldite® GY 250 zugegeben, wobei darauf geachtet wurde, dass die Temperatur nicht über 105 °C stieg. Schliesslich wurde die Reaktionsmischung während 2 Stunden bei 90 °C weitergerührt und dann abgekühlt.

Es wurde eine gelbliche, bei Raumtemperatur feste, wachsartige Masse erhalten. Deren Viskosität bei 50 °C und das (berechnete) NH-Equivalentgewicht sind in der Tabelle 1 angegeben. Als NH-Equivalentgewicht wird im vorliegenden Dokument das Equivalentgewicht pro an ein AminStickstoff gebundenes Wasserstoffatom bezeichnet.

### Beispiele 2 bis 7 und Vergleichsbeispiele 8 und 9

Die Beispiele **2** bis **7** sowie das Vergleichsbeispiel **8** wurden analog dem Beispiel **1** hergestellt, wobei die Inhaltsstoffe gemäss den Angaben von Tabelle 1 in der angegebenen Reihenfolge verwendet wurden. Die Mengen sind in Gramm angegeben. Beim Vergleichsbeispiel **8** wurde nach der Zugabe von Dimethylacrylamid jeweils eine Reaktionszeit von 1 Stunde anstelle von 15 Minuten eingehalten, bevor eine weitere Zugabe erfolgte. Beim Vergleichsbeispiel **9** wurde nach der ersten Zugabe von Butylenoxid eine Reaktionszeit von 14 Stunden bei 60 °C anstelle von 15 Minuten bei 90 °C eingehalten, und nach der zweiten Zugabe von Butylenoxid wurde eine Reaktionszeit von 3 Stunden bei 60 °C und dann 90 Minuten bei 90 °C eingehalten, bevor jeweils die weitere Zugabe erfolgte.

Alle Härter-Zusammensetzungen der Beispiele **1** bis **7** und der Vergleichsbeispiele **8** und **9** lagen bei Raumtemperatur als gelbliche, feste, wachsartige Massen vor. Sie liessen sich im aufgeschmolzenen Zustand durch einfaches Rühren mit einem Spatel mit Wasser verdünnen, wobei jeweils eine fast klare Flüssigkeit erhalten wurde. Die Herstelldauer des Vergleichsbeispiels **9** ist wesentlich länger als die Herstelldauer der Härter-Zusammensetzungen der Beispiele **1** bis **7.**

**Tabelle 1: Zusammensetzung und Eigenschaften der Beispiele 1 bis 7 und der Vergleichsbeispiele 8 und 9**

| **Beispiel** | **1** | **2** | **3** | **4** | **5** | **6** | **7** | **8 (Vgl.)** | **9 (Vgl.)** |
|---|---|---|---|---|---|---|---|---|---|
| Jeffamine® ED-2003 | 200 | 200 | 200 | 200 | 200 | 200 | 200 | 200 | 200 |
| Armeen® CD | 20 | 20 | 20 | - | - | 20 | 20 | 20 | 20 |
| Benzylamin | - | - | - | 10.7 | - | - | - | - | - |
| 2-Ethylhexylamin | - | - | - | - | 12.9 | - | - | - | - |
| Araldite® GY 250 | 37.5 | 37.5 | 37.5 | 37.5 | 37.5 | 37.5 | 37.5 | 37.5 | 37.5 |
| 2,5-Hexandion | 11.4 | 11.4 | - | 11.4 | 11.4 | 11.4 | - | - | - |
| 2,4-Pentandion | - | - | 10 | - | - | - | 10 | - | - |
| Dimethylacrylamid | - | - | - | - | - | - | - | 9.9 | - |
| Butylenoxid | - | - | - | - | - | - | - | - | 7.2 |
| N4-Amin | 52.2 | - | 52.2 | 52.2 | 52.2 | 52.2 | 52.2 | 52.2 | 52.2 |
| *TEPA* | - | 56.7 | - | - | - | - | - | - | - |
| 2,5-Hexandion | 34.2 | 34.2 | - | 34.2 | 34.2 | - | 34.2 | - | - |
| 2,4-Pentandion | - | - | 30 | - | - | 30 | - | - | - |
| Dimethylacrylamid | - | - | - | - | - | - | - | 29.7 | - |
| Butylenoxid | - | - | - | - | - | - | - | - | 21.6 |
| Armeen® CD | 60 | 60 | 60 | - | - | 60 | 60 | 60 | 60 |
| Benzylamin | - | - | - | 32.1 | - | - | - | - | - |
| 2-Ethylhexylamin | - | - | - | - | 38.7 | - | - | - | - |
| Araldite® GY 250 | 112.5 | 112.5 | 112.5 | 112.5 | 112.5 | 112.5 | 112.5 | 112.5 | 112.5 |
| η_{50°C} [Pa·s] | 6 | 9 | 6 | 16 | 8 | 4 | 4 | 11 | 11 |
| NH-Eq.Gew. [g/Eq] | 377 | 313 | 373 | 350 | 357 | 374 | 376 | 290 | 284 |

### 4. Herstellung von Härter-Zusammensetzungen vom Typ H2, bzw. HW

### Beispiel 10

In einem Rundkolben wurden unter Stickstoffatmosphäre 200 g der Härter-Zusammensetzung aus Beispiel **1** vorgelegt, mit 126.5 g Jeffamine® D-230 versetzt und die Reaktionsmischung unter Rühren auf 90 °C aufgeheizt. Dann wurden unter gutem Rühren langsam 98.5 g Araldite® GY 250 zugegeben, wobei darauf geachtet wurde, dass die Temperatur nicht über 105 °C stieg. Schliesslich wurde die Reaktionsmischung während 90 Min. bei 90 °C weitergerührt, dann nacheinander 75 g Isophorondiamin und 489.1 g Wasser eingerührt und dann abgekühlt.

Es wurde eine gelbliche, klare Flüssigkeit erhalten. Die Viskosität bei 20 °C, das (berechnete) NH-Equivalentgewicht, der Wassergehalt (inkl. gebildetes Wasser, in Gew.-%) und die Lagerstabilität bei 50 °C sind in der Tabelle 2 angegeben.

### Beispiele 11 bis 17 und Vergleichsbeispiele 18 und 19

Die Beispiele **11** bis **17** sowie die Vergleichsbeispiele **18** und **19** wurden analog dem Beispiel **10** hergestellt, wobei die Inhaltsstoffe gemäss den Angaben in der Tabelle 2 verwendet wurden. Die Mengen sind in Gramm angegeben.

Es wurden bei allen Beispielen ausser bei den Vergleichsbeispielen **18** und **19** jeweils eine klare Flüssigkeit erhalten. Der **Aspekt** wurde visuell beurteilt und in der Tabelle 2 angegeben.

Für die Beurteilung der **Lagerstabilität** ("*Lagerstab_{50°C}*") wurden die Härter-Zusammensetzungen während 4 Wochen auf 50 °C erwärmt. Trat in dieser Zeit keine Koaleszenz auf, wurde die Zusammensetzung als stabil, bzw. "ok", ansonsten als nicht stabil, bzw. "nein", bezeichnet.

**Tabelle 2: Zusammensetzung und Eigenschaften der Beispiele 10 bis 17 und der Vergleichsbeispiele 18 und 19.**

| **Beispiel** | **10** | **11** | **12** | **13** | **14** | **15** | **16** | **17** | **18 (Vgl.)** | **19 (Vgl.)** |
|---|---|---|---|---|---|---|---|---|---|---|
| Menge [g] | 200 | 200 | 200 | 200 | 200 | 200 | 200 | 200 | 200 | 200 |
| Beispiel | 1 | **1** | **2** | **3** | **4** | **5** | **6** | **7** | **8** | **9** |
| Jeffamine D230 | 126.5 | 126.5 | 126.5 | 126.5 | 126.5 | 126.5 | 126.5 | 126.5 | 126.5 | 126.5 |
| Araldite GY250 | 98.5 | 98.5 | 98.5 | 98.5 | 98.5 | 98.5 | 98.5 | 98.5 | 98.5 | 98.5 |
| *IPDA* | 75 | - | 75 | 75 | 75 | 75 | 75 | 75 | 75 | 75 |
| *MXDA* | - | 59.8 | - | - | - | - | - | - | - | - |
| Wasser | 489.1 | 473.9 | 489.1 | 494.5 | 488.3 | 488.5 | 493.1 | 490.4 | 500 | 500 |
| Wassergehalt | 50 | 50 | 50 | 50 | 50 | 50 | 50 | 50 | 50 | 50 |
| Aspekt | gelb klar | gelb klar | gelb klar | gelb klar | gelb klar | gelb klar | gelb klar | gelb klar | milchig | leicht trüb |
| η_{20°C}[Pa·s] | 35 | 73 | 30 | 16 | 9 | 10 | 18 | 25 | 20 | 30 |
| *Lagerstab_{50°C}* | ok | ok | ok | ok | ok | ok | ok | ok | nein | ok |
| NH-Eq. [g/Eq] | 256 | 248 | 249 | 257 | 253 | 254 | 256.5 | 256 | 248 | 247.5 |

### 5. Herstellung von Epoxidharz-Zusammensetzungen

### Beispiele 20 bis 27 und Vergleichsbeispiele 28 und 29

Die Härter-Zusammensetzungen vom Typ **H2,** bzw. **HW,** aus den Beispielen **10** bis **17** und die Härter-Zusammensetzungen aus den Vergleichsbeispielen **18** und **19** wurden in den gemäss Tabelle 3 angegebenen Gewichtsteilen mit 50 Gewichtsteilen der Epoxidharz-Dispersion Sika® Repair/Sikafloor® EpoCem® Modul A (EEW = 288.7 g/Eq, Festkörpergehalt = 62 Gewichts-%; Sika Schweiz AG) vermischt. Für jede vermischte Zusammensetzung wurden auf eine Glasplatte ein Film mit einer Schichtdicke von 76 µm und auf eine weitere Glasplatte ein Film mit einer Schichtdicke von 500 µm aufgezogen. Davon wurden folgende Prüfungen durchgeführt:
Die **Aushärtungsgeschwindigkeit** wurde bestimmt an einem in einer Schichtdicke von 76 µm frisch aufgezogenen Film auf Glas mittels eines Trockenzeitmessgerätes von BYK-Gardner (Methode nach Beck-Koller): In Tabelle 3 wurde der Anfang der Grundspur ("flow") als "*t_{flow}*", der Anfang des Filmaufrisses ("softgel") als *"t_{softgel}",* der Anfang der Oberflächenspur ("hardgel") als *"t_{hardgel"},* und das Ende der Oberflächenspur ("cured") als *"t_{cured}",* bezeichnet.

Die **Härte** wurde bestimmt als Buchholz-Härte an einem in einer Schichtdicke von 500 µm auf eine Glasplatte aufgezogenen Film, nach einer Aushärtungszeit von 30 Tagen bei 23 °C und 50 % relative Feuchtigkeit (r.F.), mittels eines PIG-Universal-Gerätes von BYK-Gardner.

Die **Haftung** wurde bestimmt auf Glas an einem in einer Schichtdicke von 500 µm auf eine Glasplatte aufgezogenen Film. Zur Prüfung der Haftung wurde der Film mehrmals mit einem Messer bis auf die Glasplatte angeschnitten und versucht, mit der Messerklinge den Film von der Glasplatte zu lösen. War dies nicht möglich, wurde die Haftung als "gut" bezeichnet.

Der Aspekt wurde beurteilt an jeweils zwei Filmen auf Glas mit einer Schichtdicke von 76 µm bzw. 500 µm, und in der Tabelle 3 als **Aspekt (76 µm)** und als **Aspekt (500 µm)** bezeichnet. Die Aspekte wurden als klar ("klar"), trüb ("trüb"), fehlerfrei ("ff.") und strukturiert ("struk.") bezeichnet. Als fehlerfrei gelten Filme, welche klar, glänzend und klebfrei sind und keinerlei Oberflächenstruktur aufweisen. Als strukturiert gelten Filme, deren Oberfläche nicht vollständig glatt ist, sondern eine leichte Orangenhaut aufweist.

Die Resultate der Prüfungen sind in der Tabelle 3 angegeben.

**Tabelle 3: Zusammensetzung und Eigenschaften der Beispiele 20 bis 27 und der Vergleichsbeispiele 28 und 29.**

| **Beispiel** | **20** | **21** | **22** | **23** | **24** | **25** | **26** | **27** | **28 (Vgl.)** | **29 (Vgl.)** |
|---|---|---|---|---|---|---|---|---|---|---|
| Menge | 44.3 | 44.0 | 43.3 | 44.3 | 44.0 | 44.3 | 44.3 | 44.3 | 43.6 | 42.6 |
| Beispiel | **10** | **11** | **12** | **13** | **14** | **15** | **16** | **17** | **18** | **19** |
| *t_{flow}* [h] | 4 | 3.5 | 2.5 | 3 | 2.5 | 1.2 | 3.8 | 4 | n.b. | 2.2 |
| *t_{softgel}* [h] | 5 | 4.5 | 3.3 | 3.7 | 3 | 1.7 | 4.4 | 4.9 | 4 | 3 |
| *t_{hardgel}* [h] | 8.6 | 7.7 | 9 | 7.7 | 7.1 | 8.4 | 9.7 | 10.2 | 10 | 5.6 |
| *t_{cured}* [h] | 13.8 | 10.8 | 13 | 12.8 | 12.5 | 12.7 | 13.8 | 14.3 | >24 | 12 |
| Aspekt (76 µm) | klar, ff. | klar, ff. | klar, ff. | klar, ff. | klar, ff. | klar, ff. | klar, ff. | klar, ff. | trüb, struk. | klar, ff. |
| Aspekt (500 µm) | klar, ff. | fast klar, ff. | klar, ff. | klar, ff. | klar, ff. | klar, ff. | klar, ff. | klar, ff. | trüb | klar, ff. |
| Härte | 100 | 100 | 100 | 111 | 111 | 111 | 100 | 100 | 95 | 100 |
| Haftung | gut | nein | gut | gut | gut | gut | gut | gut | gut | gut |

### 6. Herstellung von ECC-Zusammensetzungen

### Beispiel 30

7.2 Gewichtsteile der Härter-Zusammensetzung aus Beispiel **10** wurden mit 17.6 Gewichtsteilen Wasser und 0.19 Gewichtsteilen Entschäumer (BYK®-023, BYK-Chemie) vermischt (= Härter-Komponente). Dazu wurden 10 Gewichtsteile Sika® Repair/Sikafloor® EpoCem® Modul A (EEW = 288.7 g/Eq, Festkörpergehalt = 62 Gewichts-%; Sika Schweiz AG) (= Harz-Komponente) und 150 Gewichtsteile Sikafloor®-81 EpoCem® Komponente C (Sika Schweiz AG) (= zementhaltiges Pulver) gegeben und alles gut vermischt. Von der erhaltenen ECC-Zusammensetzung wurden die Erstarrungszeit nach EN 480-2, das Ausbreitmass nach EN 1015-3 sowie die Druckfestigkeit und die Biegezugfestigkeit an Prismen der Dimension 40×40×160 mm nach EN 13892-2, die Haftzugfestigkeit nach EN 13892-8 und der Schwund (Längenänderung) an Prismen der Dimension 40×40×160 mm nach DIN 52450 nach unterschiedlich langer Lagerung bei Normklima (23 °C, 50 % relative Feuchtigkeit) bestimmt. Die Resultate sind in Tabelle 4 angegeben.

### Beispiel 31

Auf dieselbe Weise wie für Beispiel **30** beschrieben wurde mit der Härter-Zusammensetzung aus Beispiel **13** ein ECC-Mörtel hergestellt und geprüft. Die Resultate sind in Tabelle 4 angegeben.

**Tabelle 4: Eigenschaften der Beispiele 30 und 31.**

| Beispiel | | **30** | **31** |
|---|---|---|---|
| Erstarrungszeit (Beginn / Ende) [h] | | 6.5 / 8.8 | 6.8 / 10 |
| Ausbreitmass (20 min, 23 °C) | | 353 mm | 346 mm |
| Verarbeitbarkeit auf Beton | | sehr gut | sehr gut |
| Beurteilung der Oberfläche auf Betonunterlage nach 1 d Normklima | | regelmässig, keine Risse | regelmässig, keine Risse |
| Druckfestigkeit | nach 1d Normklima | 27.7 MPa | 23.0 MPa |
| | nach 7d Normklima | 57.9 MPa | 54.3 MPa |
| | nach 28d Normklima | 66.5 MPa | 62.3 MPa |
| Biegezugfestigkeit | nach 1d Normklima | 5.7 MPa | 4.8 MPa |
| | nach 7d Normklima | 11.3 MPa | 8.7 MPa |
| | nach 28d Normklima | 15.6 MPa | 11.9 MPa |
| Schwund | nach 1d Normklima | -1.30 ‰ | - 0.950 ‰ |
| | nach 7d Normklima | -1.80 ‰ | - 1.307 ‰ |
| | nach 28d Normklima | - 2.24 ‰ | - 1.660 ‰ |
| Haftzug nach 28d Normklima | | 4.1 MPa | 3.4 MPa |
| | Bruchbild | 100% Betonbruch | 100% Betonbruch |

Die ECC-Zusammensetzungen der Beispiele **30** und **31** lassen sich ausserordentlich gut verarbeiten, weisen sehr gute mechanische Eigenschaften auf und härten mit tadelloser Oberflächenästhetik aus.

## Patentansprüche

1. Verbindung **VB** der Formel (I) oder (II) 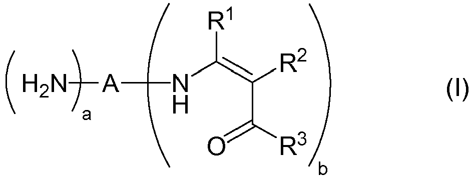 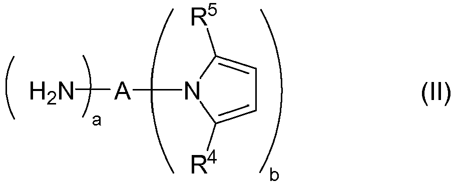 wobei
entweder
R¹ und R³ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen, und
R² für ein Wasserstoffatom oder für eine Alkyl-, Cycloalkyl-, Aryl- oder Arylalkylgruppe mit 1 bis 12 C-Atomen steht,
oder
R² und R¹ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, stehen und R³ für eine Alkyl-, Cycloalkyl-, Aryl- oder Arylalkylgruppe mit 1 bis 12 C-Atomen, welche gegebenenfalls Ethergruppen oder Halogenatome aufweist, steht;
oder
R² und R³ zusammen für einen zweiwertigen Kohlenwasserstoffrest, der Teil eines, gegebenenfalls substituierten, carbocylischen Rings mit 5 bis 8, bevorzugt 5 oder 6, C-Atomen ist, stehen und R¹ für eine Alkyl-, Cycloalkyl-, Aryl- oder Arylalkylgruppe mit 1 bis 12 C-Atomen, welche gegebenenfalls Ethergruppen oder Halogenatome aufweist, steht;
R⁴ und R⁵ unabhängig voneinander jeweils für eine Alkyl-, Cycloalkyl-, Aryl- oder Arylalkylgruppe mit 1 bis 12 C-Atomen, welche gegebenenfalls Ethergruppen oder Halogenatome aufweist, stehen;
A für einen (a+b)-wertigen Rest eines Polyamin-Polyepoxid-Addukts nach Entfernung von (a+b) primären Aminogruppen steht;
a für eine ganze Zahl von 0 bis 4 steht; und
b für eine ganze Zahl von 1 bis 4 steht;
mit den Massgaben, dass die Summe von a und b für eine ganze Zahl von 1 bis 4 steht, und dass das dem Polyamin-Polyepoxid-Addukt zugrunde liegende Polyepoxid ein Polyepoxid **E,** insbesondere ein Diepoxid **E1,** ist, und ein Epoxy-Equivalent-Gewicht (EEW) von 65 bis 500 g/Eq aufweist.

2. Verbindung **VB** gemäss Anspruch 1, **dadurch gekennzeichnet, dass** sie die Formel (Ia) oder (Ib) aufweist, 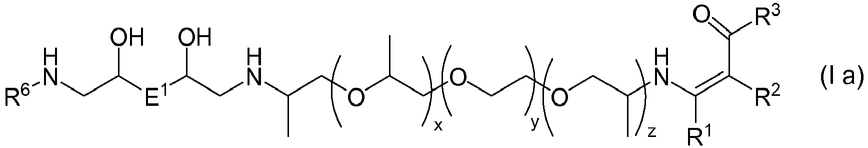 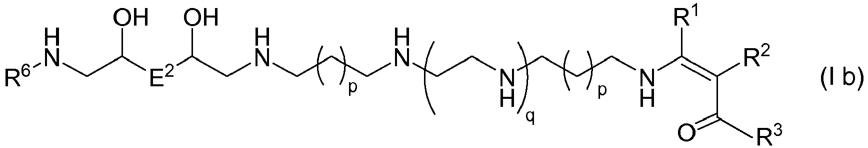 wobei
R⁶ für eine Alkyl- oder Cycloalkyl- oder Arylalkylgruppe, welche gegebenenfalls Ether- oder sekundäre Aminogruppen aufweist, steht;
E¹ und E² unabhängig voneinander jeweils für den Rest eines Diepoxids **E1** mit einem Epoxy-Equivalent-Gewicht (EEW) von 65 bis 500 g/Eq nach Entfernung von zwei Epoxidgruppen steht;
x für eine ganze Zahl von 0 bis 50 steht;
y für eine ganze Zahl von 0 bis 100, bevorzugt für 10 bis 50, steht;
z für eine ganze Zahl von 1 bis 50 steht;
(x+z) für eine ganze Zahl von 1 bis 100, bevorzugt für 1 bis 10, steht;
p für 0 oder 1 steht; und
q für 0, 1, 2 oder 3 steht.

3. Verbindung **VB** gemäss Anspruch 1, **dadurch gekennzeichnet, dass** sie die Formel (IIa) oder (IIb) aufweist, 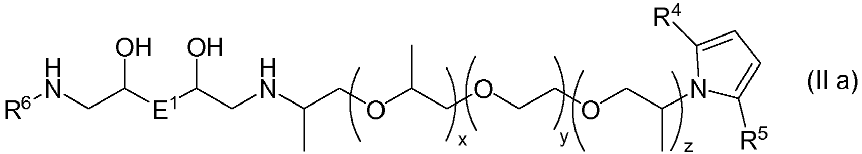 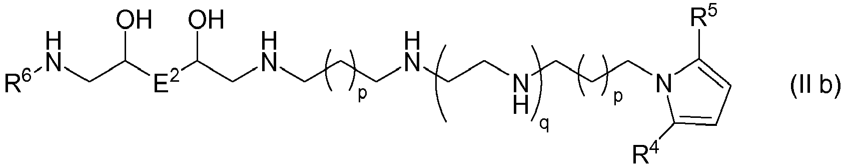 wobei
R⁶ für eine Alkyl- oder Cycloalkyl- oder Arylalkylgruppe, welche gegebenenfalls Ether- oder sekundäre Aminogruppen aufweist, steht;
E¹ und E² unabhängig voneinander jeweils für den Rest eines Diepoxids **E1** mit einem Epoxy-Equivalent-Gewicht (EEW) von 65 bis 500 g/Eq nach Entfernung von zwei Epoxidgruppen steht;
x für eine ganze Zahl von 0 bis 50 steht;
y für eine ganze Zahl von 0 bis 100, bevorzugt für 10 bis 50, steht;
z für eine ganze Zahl von 1 bis 50 steht;
(x+z) für eine ganze Zahl von 1 bis 100, bevorzugt für 1 bis 10, steht;
p für 0 oder 1 steht; und
q für 0, 1, 2 oder 3 steht.

4. Verfahren zur Herstellung einer Verbindung **VB** gemäss einem der Ansprüche 1 bis 3, **dadurch gekennzeichnet, dass**
(α) mindestens ein Polyamin **A1** enthaltend mindestens zwei primäre Aminogruppen,
(β) gegebenenfalls mindestens ein Amin **A2** enthaltend nur eine primäre Aminogruppe,
(γ) mindestens ein Polyepoxid **E** mit einem Epoxy-Equivalent-Gewicht (EEW) von 65 bis 500 g/Eq und
(δ) mindestens ein Diketon **K1** der Formel (IV) oder **K2** der Formel (V) 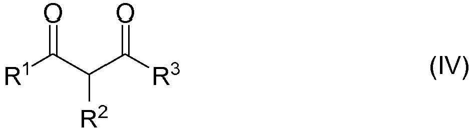 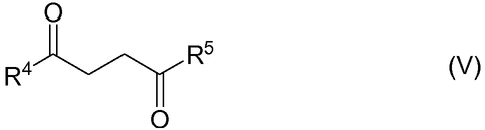 über mehr als eine Stufe miteinander umgesetzt werden,
wobei das Verhältnis zwischen der Anzahl primärer Aminogruppen und Epoxidgruppen insbesondere 1.25 bis 2.0 beträgt,
und wobei das Diketon **K1** oder **K2** im Verhältnis zu den in Bezug auf die Epoxidgruppen überschüssigen primären Aminogruppen insbesondere in einer Menge von 0.25 bis 1.0 Equivalent eingesetzt wird.

5. Verfahren gemäss Anspruch 4, **dadurch gekennzeichnet, dass** das Diketon **K1** ausgewählt aus der Gruppe bestehend aus 2,4-Pentandion, 3-Methyl-, 3-Ethyl-, 3-Propyl-, 3-Isopropyl-, 3-Butyl-, 3-tert.Butyl-, 3-Cyclohexyl- und 3-Phenyl-2,4-pentandion, 3,5-Heptandion, 6-Methyl-3,5-heptandion, 2,2,6,6-Tetramethyl-3,5-heptandion, 2,2,4,6,6-Pentamethyl-3,5-heptandion, 2-Acetylcyclopentanon und 2-Acetylcyclohexanon, ist und bevorzugt 2,4-Pentandion ist.

6. Verfahren gemäss Anspruch 4 oder 5, **dadurch gekennzeichnet, dass** das Polyamin **A1** ausgewählt ist aus der Gruppe bestehend aus Ethergruppen-haltigen Diaminen der Formel (VIII), wobei in der Formel (VIII) x, y und z die bereits genannten Bedeutungen aufweisen, insbesondere mit einem Molekulargewicht von 500 bis 5000 g/mol, und Polyalkylenaminen, insbesondere Diethylentriamin (DETA), Triethylentetramin (TETA), Tetraethylenpentamin (TEPA), Pentaethylenhexamin (PEHA), Polyethylenpolyamin mit 5 bis 7 Ethylenamin-Einheiten (sogenanntes "higher ethylenepolyamine", HEPA), 3-(2-Aminoethyl)aminopropylamin (N3-Amin) und N,N'-Bis(3-aminopropyl)ethylendiamin (N4-Amin).

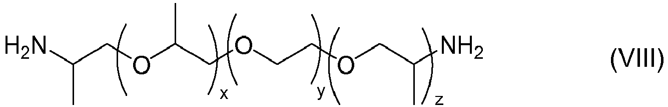

7. Härter-Zusammensetzung enthaltend
(a) mindestens eine Verbindung **VB** der Formel (I) oder (II) gemäss einem der Ansprüche 1 bis 3.

8. Härter-Zusammensetzung gemäss Anspruch 7, **dadurch gekennzeichnet, dass** sie mindestens eine Verbindung **VB** der Formel (Ia) oder (IIa) gemäss einem der Ansprüche 2 bis 3, sowie mindestens eine Verbindung **VB** der Formel (Ib) oder (IIb) gemäss einem der Ansprüche 2 bis 3 aufweist.

9. Härter-Zusammensetzung gemäss Anspruch 7 oder 8, **dadurch gekennzeichnet, dass** die Härter-Zusammensetzung zusätzlich umfasst:
(b) mindestens ein Addukt **AD** aus mindestens einem Polyamin **A3** mit mindestens zwei Aminogruppen in Form von primären oder sekundären Aminogruppen und mindestens einem Polyepoxid **E** mit einem Epoxy-Equivalent-Gewicht (EEW) von 65 bis 500 g/Eq, wobei das Addukt **AD** terminale primäre und/oder sekundäre Aminogruppen aufweist,
(c) gegebenenfalls mindestens ein Polyamin **A4** mit mindestens zwei Aminogruppen in Form von primären oder sekundären Aminogruppen, und
(d) gegebenenfalls Wasser.

10. Härter-Zusammensetzung gemäss Anspruch 9, **dadurch gekennzeichnet, dass** das Polyamin **A3** ausgewählt ist aus der Gruppe bestehend aus einerseits Polyoxyalkylen-Diaminen mit einem Molekulargewicht von höchstens 1000 g/mol, und andererseits Isophorondiamin (IPDA), 2,2,4- und 2,4,4-Trimethylhexamethylendiamin (TMD), 1,3-Xylylendiamin (meta-Xylylendiamin oder MXDA), 2-Butyl-2-ethyl-1,5-pentandiamin (C11-Neodiamin), N-Ethyl-1,3-propandiamin und N-Cyclohexyl-1,3-propandiamin.

11. Härter-Zusammensetzung gemäss Anspruch 9 oder 10, **dadurch gekennzeichnet, dass** das Polyamin **A4** ausgewählt ist aus der Gruppe bestehend aus Isophorondiamin (IPDA), Bis-(4-aminocyclohexyl)-methan (H₁₂-MDA), Bis-(4-amino-3-methylcyclohexyl)-methan, 2,2,4- und 2,4,4-Trimethylhexamethylendiamin (TMD), 1,3-Xylylendiamin (meta-Xylylendiamin oder MXDA) und 2-Butyl-2-ethyl-1,5-pentandiamin (C11-Neodiamin).

12. Härter-Zusammensetzung gemäss einem der Ansprüche 9 bis 11, **dadurch gekennzeichnet, dass** die Zusammensetzung Wasser enthält, insbesondere in einer Menge von 20 bis 90 Gewichts-%, bezogen auf die gesamte Härter-Zusammensetzung.

13. Zwei- oder dreikomponentige Epoxidharz-Zusammensetzung bestehend aus einer Härter-Komponente **C1** und einer Harz-Komponente **C2** und gegebenenfalls einer weiteren Komponente **C3,** wobei
die Härter-Komponente **C1** mindestens eine Härter-Zusammensetzung gemäss einem der Ansprüche 8 bis 12 enthält oder daraus besteht;
und die Harz-Komponente **C2** mindestens ein Epoxidharz enthält oder daraus besteht;
und die Komponente **C3** mindestens eine hydraulisch abbindbare mineralische Substanz, bevorzugt Zement, enthält oder daraus besteht.

14. Ausgehärtete Zusammensetzung, welche erhalten wird durch ein Mischen der Komponenten einer zwei- oder dreikomponentigen Epoxidharz-Zusammensetzung gemäss Anspruch 13.

15. Verwendung einer Verbindung **VB** gemäss einem der Ansprüche 1 bis 3 als Härter für Substanzen, welche mindestens zwei gegenüber NH- und OH-Gruppen reaktive Gruppen aufweisen und welche insbesondere ausgewählt sind aus der Gruppe bestehend aus Isocyanat-, Isothiocyanat-, Cyclocarbonat-, Epoxid-, Episulfid-, Aziridin-, Acryl-, Methacryl-, 1-Ethinylcarbonyl-, 1-Propinylcarbonyl-, Maleimid-, Citraconimid-, Vinyl-, Isopropenyl- und Allyl-Gruppen.

16. Verwendung einer zwei- oder dreikomponentigen Epoxidharz-Zusammensetzung gemäss Anspruch 13 als Beschichtung, insbesondere als Bodenbeschichtung.

## Claims

1. Compound **VB** of the formula (I) or (II) 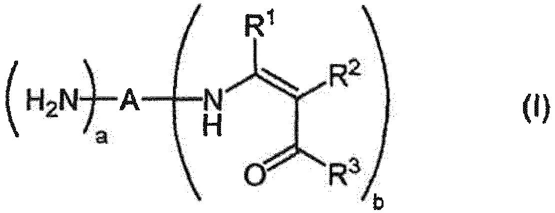 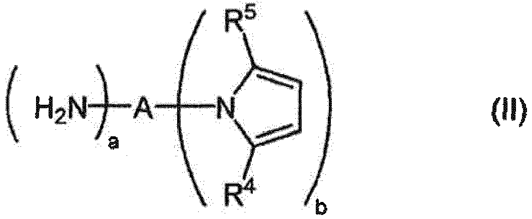 where
R¹ and R³ are each independently an alkyl, cycloalkyl, aryl or arylalkyl group which has 1 to 12 carbon atoms and optionally has ether groups or halogen atoms, and
R² is a hydrogen atom or an alkyl, cycloalkyl, aryl or arylalkyl group having 1 to 12 carbon atoms,
or
R² and R¹ together are a divalent hydrocarbon radical which is part of an optionally substituted carbocyclic ring having 5 to 8 and preferably 5 or 6 carbon atoms, and R³ is an alkyl, cycloalkyl, aryl or arylalkyl group which has 1 to 12 carbon atoms and optionally has ether groups or halogen atoms;
or
R² and R³ together are a divalent hydrocarbon radical which is part of an optionally substituted carbocyclic ring having 5 to 8 and preferably 5 or 6 carbon atoms, and R¹ is an alkyl, cycloalkyl, aryl or arylalkyl group which has 1 to 12 carbon atoms and optionally has ether groups or halogen atoms;
R⁴ and R⁵ are each independently an alkyl, cycloalkyl, aryl or arylalkyl group which has 1 to 12 carbon atoms and optionally has ether groups or halogen atoms;
A is an (a+b)-valent radical of a polyamine-polyepoxide adduct after removal of (a+b) primary amino groups;
a is an integer from 0 to 4; and
b is an integer from 1 to 4;
with the provisos that the sum of a and b is an integer from 1 to 4, and that the parent polyepoxide of the polyamine-polyepoxide adduct is a polyepoxide **E,** especially a diepoxide **E1,** and has an epoxy equivalent weight (EEW) of 65 to 500 g/eq.

2. Compound **VB** according to Claim 1, **characterized in that** it has the formula (Ia) or (Ib) 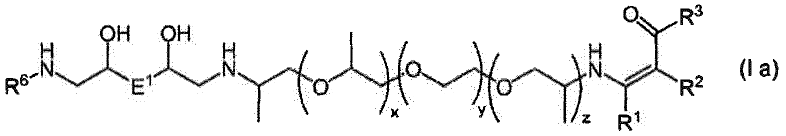 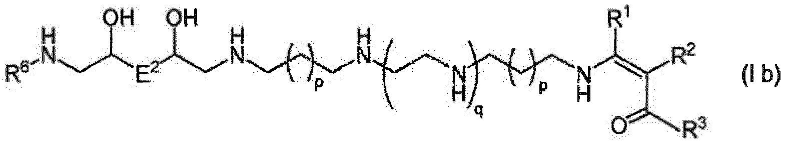 where
R⁶ is an alkyl or cycloalkyl or arylalkyl group which optionally has ether or secondary amino groups;
E¹ and E² are each independently the remainder of a diepoxide **E1** having an epoxy equivalent weight (EEW) of 65 to 500 g/eq, after removal of two epoxy groups;
x is an integer from 0 to 50;
y is an integer from 0 to 100, preferably 10 to 50;
z is an integer from 1 to 50;
(x+z) is an integer from 1 to 100, preferably 1 to 10;
p is 0 or 1; and
q is 0, 1, 2 or 3.

3. Compound **VB** according to Claim 1, **characterized in that** it has the formula (IIa) or (IIb) 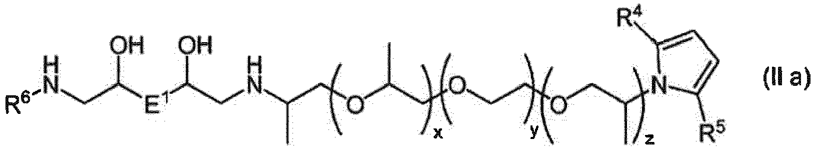 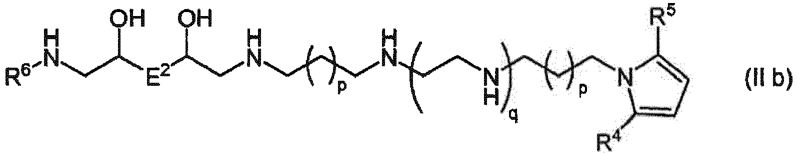 where
R⁶ is an alkyl or cycloalkyl or arylalkyl group which optionally has ether or secondary amino groups;
E¹ and E² are each independently the remainder of a diepoxide **E1** having an epoxy equivalent weight (EEW) of 65 to 500 g/eq, after removal of two epoxy groups;
x is an integer from 0 to 50;
y is an integer from 0 to 100, preferably 10 to 50;
z is an integer from 1 to 50;
(x+z) is an integer from 1 to 100, preferably 1 to 10;
p is 0 or 1; and
q is 0, 1, 2 or 3.

4. Process for preparing a compound **VB** according to any of Claims 1 to 3, **characterized in that**
(α) at least one polyamine **A1** containing at least two primary amino groups,
(β) optionally at least one amine **A2** containing only one primary amino group,
(γ) at least one polyepoxide **E** having an epoxy equivalent weight (EEW) of 65 to 500 g/eq and
(δ) at least one diketone **K1** of the formula (IV) or **K2** of the formula (V) 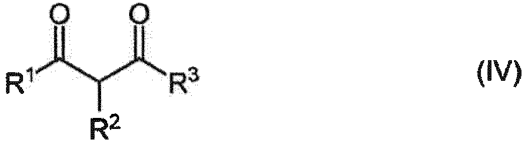 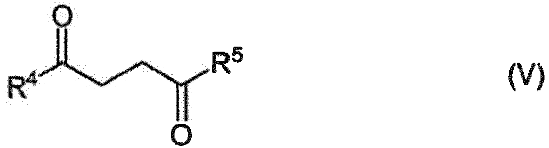 are reacted with one another over more than one stage, where the ratio between the number of primary amino groups and epoxy groups is especially 1.25 to 2.0,
and where the diketone **K1** or **K2** is used in a ratio to the primary amino groups, which are in excess in relation to the epoxy groups, especially in an amount of 0.25 to 1.0 equivalent.

5. Process according to Claim 4, **characterized in that** the diketone **K1** is selected from the group consisting of 2,4-pentanedione, 3-methyl-, 3-ethyl-, 3-propyl-, 3-isopropyl-, 3-butyl-, 3-tert-butyl-, 3-cyclohexyl-, and 3-phenyl-2,4-pentanedione, 3,5-heptanedione, 6-methyl-3,5-heptanedione, 2,2,6,6-tetramethyl-3,5-heptanedione, 2,2,4,6,6-pentamethyl-3,5-heptanedione, 2-acetylcyclopentanone and 2-acetylcyclohexanone, and is preferably 2,4-pentanedione.

6. Process according to Claim 4 or 5, **characterized in that** the polyamine **A1** is selected from the group consisting of ether-containing diamines of the formula (VIII), where x, y and z in the formula (VIII) have the definitions already given especially having a molecular weight of 500 to 5000 g/mol, and polyalkyleneamines, especially diethylenetriamine (DETA), triethylenetetramine (TETA), tetraethylenepentamine (TEPA), pentaethylenehexamine (PEHA), polyethylenepolyamine having 5 to 7 ethyleneamine units (known as "higher ethylenepolyamine", HEPA), 3-(2-aminoethyl)aminopropylamine (N3-amine) and N,N'-bis(3-aminopropyl)ethylenediamine (N4-amine).

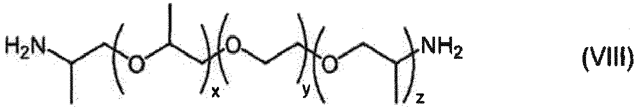

7. Hardener composition comprising
(a) at least one compound **VB** of the formula (I) or (II) according to any of Claims 1 to 3.

8. Hardener composilion according to Claim 7, **characterized in that** it comprises at least one compound **VB** of the formula (Ia) or (IIa) according to either of Claims 2 and 3, and at least one compound **VB** of the formula (Ib) or (IIb) according to either of Claims 2 and 3.

9. Hardener composition according to Claim 7 or 8, **characterized in that** the hardener composition additionally comprises:
(b) at least one adduct **AD** formed from at least one polyamine **A3** having at least two amino groups in the form of primary or secondary amino groups and at least one polyepoxide **E** having an epoxy equivalent weight (EEW) of 65 to 500 g/eq, where the adduct **AD** has terminal primary and/or secondary amino groups,
(c) optionally at least one polyamine **A4** having at least two amino groups in the form of primary or secondary amino groups, and
(d) optionally water.

10. Hardener composition according to Claim 9, **characterized in that** the polyamine **A3** is selected from the group consisting of firstly polyoxyalkylenediamines having a molecular weight of at most 1000 g/mol, and secondly isophoronediamine (IPDA), 2,2,4- and 2,4,4-trimethylhexamethylenediamine (TMD), 1,3-xylylenediamine (meta-xylylenediamine or MXDA), 2-butyl-2-ethyl-1,5-pentanediamine (C11-neodiamine), N-ethyl-1,3-propanediamine and N-cyclohexyl-1,3-propanediamine.

11. Hardener composition according to Claim 9 or 10, **characterized in that** the polyamine **A4** is selected from the group consisting of isophoronediamine (IPDA), bis(4-aminocyclohexyl)methane (H₁₂-MDA), bis(4-amino-3-methylcyclohexyl)methane, 2,2,4- and 2,4,4-trimethylhexamethylenediamine (TMD), 1,3-xylylenediamine (meta-xylylenediamine or MXDA) and 2-butyl-2-ethyl-1,5-pcntancdiaminc (C11-ncodiaminc).

12. Hardener composition according to any of Claims 9 to 11, **characterized in that** the composition contains water, especially in an amount of 20 to 90% by weight, based on the overall hardener composition.

13. Two-component or three-component epoxy resin composition consisting of a hardener component **C1** and a resin component **C2** and optionally a further component **C3,** where
hardener component **C1** comprises or consists of at least one hardener composition according to any of Claims 8 to 12;
and resin component **C2** comprises or consists of at least one epoxy resin;
and component **C3** comprises or consists of at least one hydraulically setting mineral substance, preferably cement.

14. Hardened composition which is obtained by mixing the components of a two- or three-component epoxy resin composition according to Claim 13.

15. Use of a compound **VB** according to any of Claims 1 to 3 as a hardener for substances which have at least two groups reactive toward NH and OH groups and which are especially selected from the group consisting of isocyanate, isothiocyanate, cyclocarbonate, epoxide, episulfide, aziridine, acryloyl, methacryloyl, 1-ethynylcarbonyl, 1-propynylcarbonyl, maleimide, citraconimide, vinyl, isopropenyl and allyl groups.

16. Use of a two- or three-component epoxy resin composition according to Claim 13 as a coating, especially as a floor coating.

## Revendications

1. Composés VB de formule (I) ou (II) 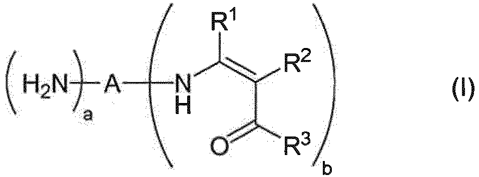 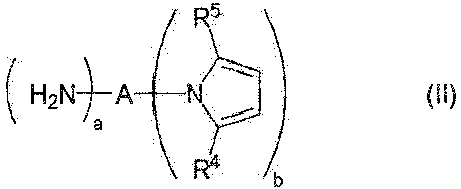 dans lesquelles soit
R¹ et R³ représentent, indépendamment l'un de l'autre, à chaque fois un groupe alkyle, cycloalkyle, aryle ou arylalkyle comprenant 1 à 12 atomes de carbone, qui présente le cas échéant des groupes éther ou des atomes d'halogène et
R² représente un atome d'hydrogène ou un groupe alkyle, cycloalkyle, aryle ou arylalkyle comprenant 1 à 12 atomes de carbone, soit
R² et R¹ représentent, ensemble, un radical hydrocarboné bivalent qui fait partie d'un cycle carbocyclique, le cas échéant substitué, comprenant 5 à 8, de préférence 5 ou 6, atomes de carbone et R³ représente un groupe alkyle, cycloalkyle, aryle ou arylalkyle comprenant 1 à 12 atomes de carbone, qui présente le cas échéant des groupes éther ou des atomes d'halogène ; soit
R² et R³ représentent, ensemble, un radical hydrocarboné bivalent qui fait partie d'un cycle carbocyclique, le cas échéant substitué, comprenant 5 à 8, de préférence 5 ou 6, atomes de carbone et R¹ représente un groupe alkyle, cycloalkyle, aryle ou arylalkyle comprenant 1 à 12 atomes de carbone, qui présente le cas échéant des groupes éther ou des atomes d'halogène ;
R⁴ et R⁵ représentent, indépendamment l'un de l'autre, à chaque fois un groupe alkyle, cycloalkyle, aryle ou arylalkyle comprenant 1 à 12 atomes de carbone, qui présente le cas échéant des groupes éther ou des atomes d'halogène ;
A représente un radical (a + b)-valent d'un produit d'addition de polyamine-polyépoxyde après élimination de (a + b) groupes amino primaire ;
a vaut un nombre entier de 0 à 4 ; et
b vaut un nombre entier de 1 à 4 ;
à condition que la somme de a et b représente un nombre entier de 1 à 4 et que le polyépoxyde à la base du produit d'addition de polyamine-polyépoxyde soit un polyépoxyde E, en particulier un diépoxyde El, et présente un poids équivalent époxy (EEW) de 65 à 500 g/équivalent.

2. Composé VB selon la revendication 1, **caractérisé en ce qu'**il présente la formule (Ia) ou (Ib), 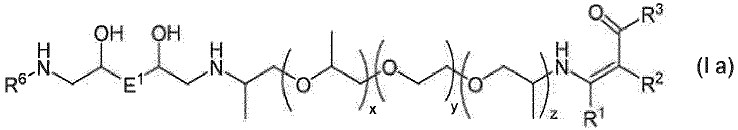 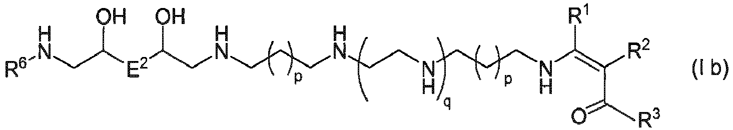 dans lesquelles
R⁶ représente un groupe alkyle ou cycloalkyle ou arylalkyle qui présente le cas échéant des groupes éther ou amino secondaire ;
E¹ et E² représentent, indépendamment l'un de l'autre, à chaque fois le radical d'un diépoxyde E1 présentant un poids équivalent époxy (EEW) de 65 à 500 g/équivalent après élimination de deux groupes époxyde ;
x représente un nombre entier de 0 à 50 ;
y représente un nombre entier de 0 à 100, de préférence de 10 à 50 ;
z représente un nombre entier de 1 à 50 ;
(x + z) représente un nombre entier de 1 à 100, de préférence de 1 à 10 ;
p représente 0 ou 1 ; et
q représente 0, 1, 2 ou 3.

3. Composé VB selon la revendication 1, **caractérisé en ce qu'**il présente la formule (II a) ou (II b), 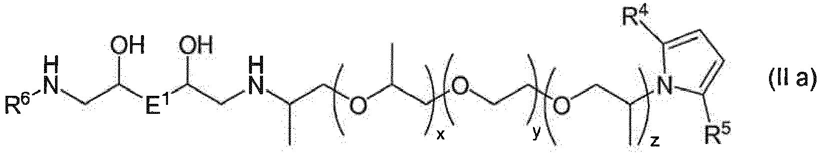 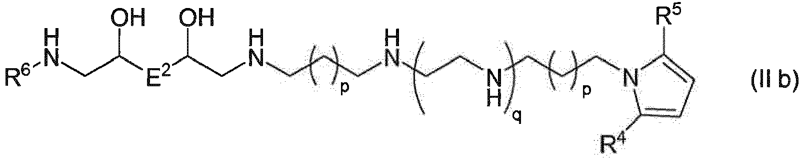 dans lesquelles
R⁶ représente un groupe alkyle ou cycloalkyle ou arylalkyle qui présente le cas échéant des groupes éther ou amino secondaire ;
E¹ et E² représentent, indépendamment l'un de l'autre, à chaque fois le radical d'un diépoxyde E1 présentant un poids équivalent époxy (EEW) de 65 à 500 g/équivalent après élimination de deux groupes époxyde ;
x représente un nombre entier de 0 à 50 ;
y représente un nombre entier de 0 à 100, de préférence de 10 à 50 ;
z représente un nombre entier de 1 à 50 ;
(x + z) représente un nombre entier de 1 à 100, de préférence de 1 à 10 ;
p représente 0 ou 1 ; et
q représente 0, 1, 2 ou 3.

4. Procédé pour la préparation du composé VB selon l'une quelconque des revendications 1 à 3, **caractérisé en ce que**
(α) au moins une polyamine A1 contenant au moins deux groupes amino primaire,
(β) le cas échéant au moins une amine A2 ne contenant qu'un seul groupe amino primaire,
(γ) au moins un polyépoxyde E présentant un poids équivalent époxy (EEW) de 65 à 500 g/équivalent et
(δ) au moins une dicétone K1 de formule (IV) ou K2 de formule (V) 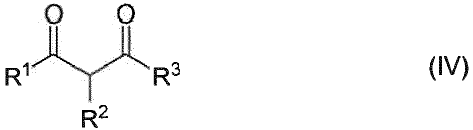 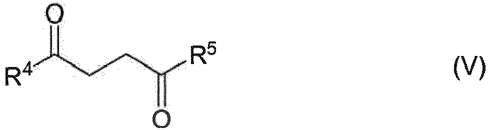 sont transformés les uns avec les autres en plus d'une étape, le rapport entre le nombre de groupes amino primaire et de groupes époxyde valant en particulier 1,25 à 2,0 et la dicétone K1 ou K2 étant utilisée, par rapport aux groupes amino primaire en excès par rapport aux groupes époxyde, en particulier en une quantité de 0,25 à 1,0 équivalent.

5. Procédé selon la revendication 4, **caractérisé en ce que** la dicétone K1 est choisie dans le groupe constitué par la 2,4-pentanedione, la 3-méthyl-2,4-pentanedione, la 3-éthyl-2,4-pentanedione, la 3-propyl-2,4-pentanedione, la 3-isopropyl-2,4-pentanedione, la 3-butyl-2,4-pentanedione, la 3-tert-butyl-2,4-pentanedione, la 3-cyclohexyl-2,4-pentanedione et la 3-phényl-2,4-pentanedione, la 3,5-heptanedione, la 6-méthyl-3,5-heptanedione, la 2,2,6,6-tétraméthyl-3,5-heptanedione, la 2,2,4,6,6-pentaméthyl-3,5-heptanedione, la 2-acétylcyclopentanone et la 2-acétylcyclohexanone et de préférence la 2,4-pentanedione.

6. Procédé selon la revendication 4 ou 5, **caractérisé en ce que** la polyamine A1 est choisie dans le groupe constitué par les diamines contenant des groupes éther de formule (VIII), où, dans la formule (VIII), x, y et z présentent les significations déjà mentionnées, présentant en particulier un poids moléculaire de 500 à 5000 g/mole, et les polyalkylénamines, en particulier la diéthylènetriamine (DETA), la triéthylènetétraamine (TETA), la tétraéthylènepentaamine (TEPA), la pentaéthylènehexaamine (PEHA), la polyéthylènepolyamine comprenant 5 à 7 unités éthylénamine (appelée "higher ethylenepolyamine", HEPA), la 3-(2-aminoéthyl)aminopropylamine (N3-amine) et la N,N'-bis(3-aminopropyl)éthylènediamine (N4-amine).

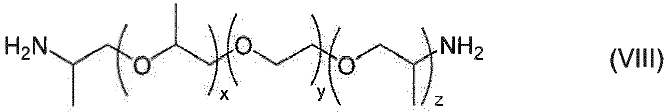

7. Composition de durcisseur, contenant (a) au moins un composé VB de formule (I) ou (II) selon l'une quelconque des revendications 1 à 3.

8. Composition de durcisseur selon la revendication 7, **caractérisée en ce qu'**elle présente au moins un composé VB de formule (I a) ou (II a) selon l'une quelconque des revendications 2 à 3 ainsi qu'au moins un composé VB de formule (I b) ou (II b) selon l'une quelconque des revendications 2 à 3.

9. Composition de durcisseur selon la revendication 7 ou 8, **caractérisée en ce que** la composition de durcisseur comprend en plus :
(b) au moins un produit d'addition AD d'au moins une polyamine A3 présentant au moins deux groupes amino sous forme de groupes amino primaire ou secondaire et d'au moins un polyépoxyde E présentant un poids équivalent époxy (EEW) de 65 à 500 g/équivalent, le produit d'addition AD présentant des groupes amino primaire et/ou secondaire terminaux,
(c) le cas échéant au moins une polyamine A4 présentant au moins deux groupes amino sous forme de groupes amino primaire ou secondaire et
(d) le cas échéant de l'eau.

10. Composition de durcisseur selon la revendication 9, **caractérisée en ce que** la polyamine A3 est choisie dans le groupe constitué d'une part par les polyoxyalkylènediamines présentant un poids moléculaire d'au plus 1000 g/mole, et d'autre part par l'isophoronediamine (IPDA), la 2,2,4-triméthylhexaméthylènediamine et la 2,4,4-triméthylhexaméthylènediamine (TMD), la 1,3-xylylènediamine (méta-xylylènediamine ou MXDA), la 2-butyl-2-éthyl-1,5-pentanediamine (C₁₁-néodiamine), la N-éthyl-1,3-propanediamine et la N-cyclohexyl-1,3-propanediamine.

11. Composition de durcisseur selon la revendication 9 ou 10, **caractérisée en ce que** la polyamine A4 est choisie dans le groupe constitué par l'isophoronediamine (IPDA), le bis-(4-aminocyclohexyl)-méthane (H₁₂-MDA), le bis-(4-amino)3-méthylcyclohexyl)-méthane, la 2,2,4-triméthylhexaméthylènediamine et la 2,4,4-triméthylhexaméthylènediamine (TMD), la 1,3-xylylènediamine (méta-xylylènediamine ou MXDA) et la 2-butyl-2-éthyl-1,5-pentanediamine (C₁₁-néodiamine).

12. Composition de durcisseur selon l'une quelconque des revendications 9 à 11, **caractérisée en ce que** la composition contient de l'eau, en particulier en une quantité de 20 à 90% en poids, par rapport à la composition totale de durcisseur.

13. Composition de résine époxyde à deux ou trois composants, constituée par un composant durcisseur C1 et un composant de résine C2 et le cas échéant un autre composant C3,
le composant durcisseur C1 contenant ou étant constitué par au moins une composition de durcisseur selon l'une quelconque des revendications 8 à 12 ;
et le composant de résine C2 contenant ou étant constitué par au moins une résine époxyde ;
et le composant C3 contenant ou étant constitué par au moins une substance minérale à prise hydraulique, de préférence le ciment.

14. Composition durcie, qui est obtenue par mélange des composants d'une composition de résine époxyde à deux ou trois composants selon la revendication 13.

15. Utilisation d'un composé VB selon l'une quelconque des revendications 1 à 3 comme durcisseur pour des substances qui présentent au moins deux groupes réactifs par rapport aux groupes NH et OH et qui sont en particulier choisies dans le groupe constitué par les groupes isocyanate, isothiocyanate, cyclocarbonate, époxyde, épisulfure, aziridine, acryle, méthacryle, 1-éthynylcarbonyle, 1-propynylcarbonyle, maléimide, citraconimide, vinyle, isopropényle et allyle.

16. Utilisation d'une composition de résine époxyde à deux ou trois composants selon la revendication 13 comme revêtement, en particulier comme revêtement de sol.
